# EUROPEAN PATENT APPLICATION

(11) **EP 4 478 781 A1**
(43) Date of publication of application: **18.12.2024**
(21) Application number: 22925336.4
(22) Date of filing: 10.02.2022
(51) Int. Cl.: H04W 36/00

(54) **IAB DONOR DEVICE AND TRANSFER MIGRATION MANAGEMENT METHOD**

(71) Applicant: FUJITSU LIMITED, Kawasaki-shi, Kanagawa 211-8588 (JP)
(72) Inventor: LU, Yang, Beijing 100022 (CN)
(74) Representative: Haseltine Lake Kempner LLP
(86) International application number: PCT/CN2022/075878
(87) International publication number: WO 2023/150974

(57) **Abstract**

Embodiments of the present disclosure provide an IAB-donor device and a transport migration management method. An IAB-DU of an IAB-node maintains F1 connection with a first donor-CU, a resource serving for a traffic of the IAB-node has been established in a topology of a second donor-CU, and the method comprises: transmitting a first transport migration modification request for the traffic to the second donor-CU; and receiving a transport migration modification response for the traffic transmitted by the second donor-CU.

## Description

### TECHNICAL FIELD

The embodiments of the present disclosure relate to the communication field.

### BACKGROUND

Future seamless cellular network deployment requires very flexible and ultra-dense new radio (NR) cell deployment, an ultra-dense network is one of goals of 5G, and deploying NR network that does not require wired backhaul is very important to realize the ultra-dense network of 5G. Because a 5G millimeter wave reduces a coverage of a cell, a wireless self-backhaul system needs multi-hops to meet deployment requirements. 5G's high bandwidth, massive Multiple Input Multiple Output (MIMO) and beam system enables it easier to develop a wireless self-backhaul system of an ultra-dense NR cell with 5G than with LTE. In order to develop such multi-hop system with wireless self-backhaul, 3GPP starts research and standardization of an Integrated Access and Backhaul (IAB) project at Rel-16.

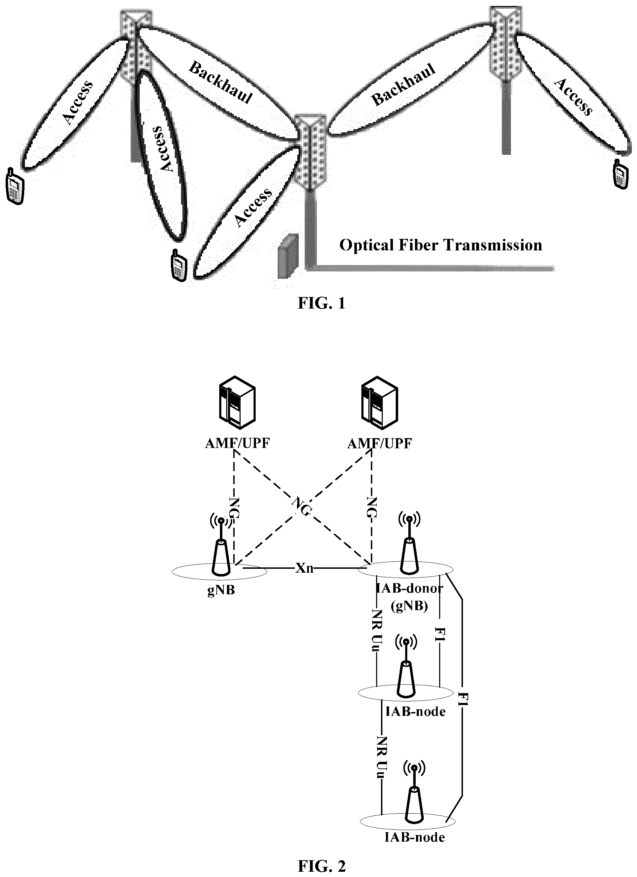

FIG. 1 is a schematic diagram of an IAB system. As shown in FIG. 1, in the IAB system, Uu air interface wireless transmission of NR is used for access and backhaul, a relay node simultaneously supports both access and backhaul functions. The relay node multiplexes an access link and a backhaul link in a time domain, a frequency domain or a space domain, and the access link and the backhaul link may use the same or different frequency bands.

In an IAB network architecture, the relay node refers to an IAB-node that simultaneously supports both access and backhaul functions. A last-hop access node at a network side is called IAB-donor that supports a gNB function and supports IAB-node access. All UE data may be backhauled to the IAB-donor via the IAB-node in one or more hops.

The function of the IAB-node is divided into two parts, one is a gNB-DU function, called IAB-DU (a distributed unit), and the other is a UE function, called IAB-MT (a mobile terminal). The IAB-DU realizes a function of a network side device, is connected to a downstream child IAB-node (child IAB node or called a child node for short), provides NR air interface access for a UE and the downstream child IAB-node, and establishes an F1 connection with IAB donor-CU (a donor centralized unit). The IAB-MT realizes a partial function of a terminal equipment, is connected to an upstream parent IAB-node (parent IAB node or called a parent node for short) or IAB-donor DU. The IAB-MT includes functions of a physical layer, a layer 2, Radio Resource Control (RRC) and a Non-Access Stratum (NAS) layer, and is further connected to the IAB Donor-CU and a Core Network (CN) indirectly.

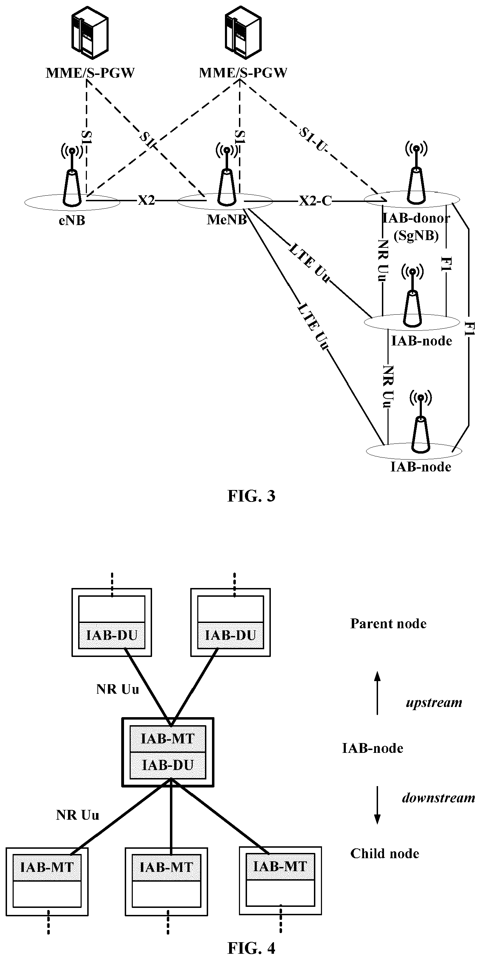

In the IAB system, the IAB-node may be accessed to a network by using a Standalone (SA) mode or an E-UTRA-NRDualConnectivity (EN-DC) mode. FIG. 2 is a schematic diagram of an IAB architecture in the SA mode. FIG. 3 is a schematic diagram of an IAB architecture in the EN-DC mode.

FIG. 4 is a schematic diagram of an IAB node, a parent node (parent IAB-node) and a child node (child IAB-node). As shown in FIG. 4, IAB-DU of the IAB node as a network side connects to IAB-MT of the child node, and the IAB-MT of the IAB node as a terminal side connects to the IAB-DU of the parent node.

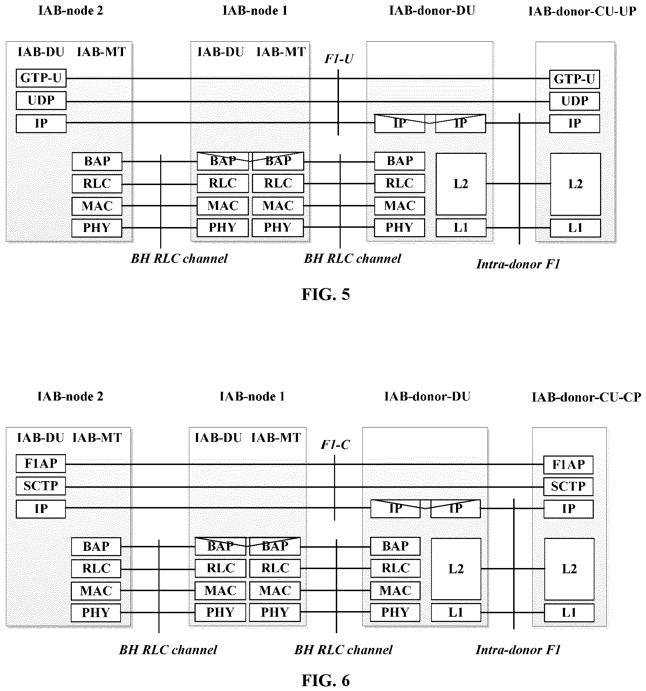

FIG. 5 is a schematic diagram of an F1 user plane (F1-U) protocol stack between the IAB-DU and the IAB-donor CU. FIG. 6 is a schematic diagram of an F1 control plane (F1-C) protocol stack between the IAB-DU and the IAB donor-CU. As shown in FIGS. 5 and 6, the F1-U and the F1-C are established on a transmission (IP) layer between the IAB-DU and the IAB donor-CU, FIGS. 5 and 6 show two-hops wireless backhaul and one-hop wired backhaul.

On a backhaul link, the transmission (IP) layer is carried on a backhaul adaptation protocol (BAP) sublayer, a BAP entity in the IAB-node implements a routing function in the IAB system, the IAB donor-CU provides a routing table. A BAP PDU (Protocol Data Unit) is transmitted in an RLC (Radio Link Control) channel of the backhaul link, multiple RLC channels of the backhaul link may be configured by the IAB-donor to carry traffics with different priorities and QoS (Quality of Service), the BAP PDU is mapped by the BAP entity to different backhaul RLC channels.

It should be noted that the above introduction to the technical background is just to facilitate a clear and complete description of the technical solutions of the present disclosure, and is elaborated to facilitate the understanding of persons skilled in the art, it cannot be considered that these technical solutions are known by persons skilled in the art just because these solutions are elaborated in the Background of the present disclosure.

### SUMMARY

The inventor finds that if a characteristic (or service parameter) of a traffic changes, it might be necessary to modify a transport migration configuration of a traffic that has been migrated. For example, when quality of service (QoS) of the traffic changes, a first donor-CU needs to update QoS information of a migration traffic, so that a second donor-CU determines whether new QoS requirements of the traffic are met and modifies a resource serving for the traffic in a topology of the second donor-CU. However, for how to modify a transport migration configuration of a traffic, currently, there is no corresponding solution.

In order to solve at least one of the above problems, the embodiments of the present disclosure provide an IAB-donor device and a transport migration management method.

According to one aspect of the embodiments of the present disclosure, a transport migration management method is provided, wherein an IAB-DU of an IAB-node maintains F1 connection with a first donor centralized unit (donor-CU), and a resource serving for a traffic of the IAB-node has been established in a topology of a second donor-CU, and the method includes:
the first donor-CU transmits a first transport migration modification request for the traffic to the second donor-CU; and
the first donor-CU receives a transport migration modification response for the traffic transmitted by the second donor-CU.

According to another aspect of the embodiments of the present disclosure, a transport migration management method is provided, wherein an IAB-DU of an IAB-node maintains F1 connection with a first donor centralized unit (donor-CU), and a resource serving for a traffic of the IAB-node has been established in a topology of a second donor-CU, and the method includes:
the second donor-CU receives a first transport migration modification request for the traffic transmitted by the first donor-CU; and
the second donor-CU transmits a transport migration modification response for the traffic to the first donor-CU.

According to another aspect of the embodiments of the present disclosure, a transport migration management method is provided, wherein an IAB-DU of an IAB-node maintains F1 connection with a first donor-CU, and a resource serving for a traffic of the IAB-node has been established in a topology of a second donor-CU, and the method includes:
the second donor-CU transmits a second transport migration modification request for a traffic to the first donor-CU; and
the second donor-CU modifies a resource serving for the traffic in the topology of the second donor-CU.

According to another aspect of the embodiments of the present disclosure, a transport migration management method is provided, wherein an IAB-DU of an IAB-node maintains F1 connection with a first donor-CU, and a resource serving for a traffic of the IAB-node has been established in a topology of a second donor-CU, and the method includes:
the first donor-CU receives a second transport migration modification request for a traffic transmitted by the second donor-CU; wherein the second donor-CU modifies a resource serving for the traffic in the topology of the second donor-CU.

According to another aspect of the embodiments of the present disclosure, an IAB-donor device is provided, wherein an IAB-DU of an IAB-node maintains F1 connection with a first donor centralized unit (donor-CU), and a resource serving for a traffic of the IAB-node has been established in a topology of a second donor-CU, and the device includes:
a transmitting portion configured to transmit a first transport migration modification request for the traffic to the second donor-CU; and
a receiving portion configured to receive a transport migration modification response for the traffic transmitted by the second donor-CU.

According to another aspect of the embodiments of the present disclosure, an IAB-donor device is provided, wherein an IAB-DU of an IAB-node maintains F1 connection with a first donor centralized unit (donor-CU), and a resource serving for a traffic of the IAB-node has been established in a topology of a second donor-CU, and the device includes:
a receiving portion configured to receive a first transport migration modification request for the traffic transmitted by the first donor-CU; and
a transmitting portion configured to transmit a transport migration modification response for the traffic to the first donor-CU.

According to another aspect of the embodiments of the present disclosure, an IAB-donor device is provided, wherein an IAB-DU of an IAB-node maintains F1 connection with a first donor-CU, and a resource serving for a traffic of the IAB-node has been established in a topology of a second donor-CU, and the device includes:
a transmitting portion configured to transmit a second transport migration modification request for a traffic to the first donor-CU; and
a processing portion configured to modify a resource serving for the traffic in the topology of the second donor-CU.

According to another aspect of the embodiments of the present disclosure, an IAB-donor device is provided, wherein an IAB-DU of an IAB-node maintains F1 connection with a first donor-CU, and a resource serving for a traffic of the IAB-node has been established in a topology of a second donor-CU, and the device includes:
a receiving portion configured to receive a second transport migration modification request for a traffic transmitted by the second donor-CU; wherein the second donor-CU modifies a resource serving for the traffic in the topology of the second donor-CU.

According to another aspect of the embodiments of the present disclosure, an IAB system is provided, including a first donor centralized unit and a second donor centralized unit;
the first donor centralized unit transmits a first transport migration modification request for a traffic, and receives a transport migration modification response for the traffic; the second donor centralized unit receives the first transport migration modification request and transmits the transport migration modification response;
   or,
the second donor centralized unit transmits a second transport migration modification request for a traffic, and modifies a resource serving for the traffic in a topology of the second donor centralized unit, and the first donor centralized unit receives the second transport migration modification request.

One of advantageous effects of the embodiments of the present disclosure lies in: a first donor-CU transmits a first transport migration modification request for a traffic to a second donor-CU; and the first donor-CU receives a transport migration modification response for the traffic transmitted by the second donor-CU. Thereby, the second donor-CU may modify a transmission resource serving for a migration traffic according to a change of a service parameter of the traffic, so that service requirements of the traffic may still be met after the service parameter of the traffic is changed.

Referring to the later description and drawings, specific implementations of the present disclosure are disclosed in detail, indicating a manner that the principle of the present disclosure can be adopted. It should be understood that the implementations of the present disclosure are not limited in terms of the scope. Within the scope of the terms of the appended supplements, the implementations of the present disclosure include many changes, modifications and equivalents.

Features that are described and/or illustrated with respect to one implementation may be used in the same way or in a similar way in one or more other implementations and in combination with or instead of the features in the other implementations.

It should be emphasized that the term "comprise/comprising/include/including" when being used herein refers to the presence of a feature, a whole piece, a step or a component, but does not exclude the presence or addition of one or more other features, whole pieces, steps or components.

### BRIEF DESCRIPTION OF DRAWINGS

An element and a feature described in a drawing or an implementation of the present embodiments of the present disclosure can be combined with an element and a feature shown in one or more other drawings or implementations. In addition, in the drawings, similar labels represent corresponding components in several drawings and may be used to indicate corresponding components used in more than one implementation.

The included drawings are used to provide a further understanding on the embodiments of the present disclosure, constitute a part of the Specification, are used to illustrate the implementations of the present disclosure, and expound the principle of the present disclosure together with the text description. Obviously, the drawings in the following description are only some embodiments of the present disclosure. Persons skilled in the art can also obtain other drawings based on the drawings under the premise that they do not pay inventive labor. In the drawings:
FIG. 1 is a schematic diagram of an IAB system;
FIG. 2 is a schematic diagram of an IAB architecture in a SA mode;
FIG. 3 is a schematic diagram of an IAB architecture in an EN-DC mode;
FIG. 4 is a schematic diagram of a parent node (parent IAB-node) and a child node (child IAB-node);
FIG. 5 is a schematic diagram of an F1-U protocol stack of the IAB system;
FIG. 6 is a schematic diagram of an F1-C protocol stack of the IAB system;
FIG. 7 is a schematic diagram of IAB system routing;
FIG. 8 is a schematic diagram of network topology adaptation;
FIG. 9 is a schematic diagram of transport migration in the embodiments of the present disclosure;
FIG. 10 is a schematic diagram of a transport migration management method in the embodiments of the present disclosure;
FIG. 11 is a signaling flow graph of transport migration modification in the embodiments of the present disclosure;
FIG. 12 is another schematic diagram of a transport migration management method in the embodiments of the present disclosure;
FIG. 13 is another schematic diagram of a transport migration management method in the embodiments of the present disclosure;
FIG. 14 is another signaling flow graph of transport migration modification in the embodiments of the present disclosure;
FIG. 15 is another schematic diagram of a transport migration management method in the embodiments of the present disclosure;
FIG. 16 is a schematic diagram of an IAB-donor device in the embodiments of the present disclosure;
FIG. 17 is another schematic diagram of an IAB-donor device in the embodiments of the present disclosure;
FIG. 18 is another schematic diagram of an IAB-donor device in the embodiments of the present disclosure;
FIG. 19 is another schematic diagram of an IAB-donor device in the embodiments of the present disclosure;
FIG. 20 is a schematic diagram of an IAB device in the embodiments of the present disclosure.

### DETAILED DESCRIPTION

Referring to the drawings, through the following Specification, the aforementioned and other features of the present disclosure will become obvious. The Specification and the drawings specifically disclose particular implementations of the present disclosure, showing partial implementations which can adopt the principle of the present disclosure. It should be understood that the present disclosure is not limited to the described implementations, on the contrary, the present disclosure includes all the modifications, variations and equivalents falling within the scope of the attached supplements.

In the embodiments of the present disclosure, the term "first" and "second", etc. are used to distinguish different elements in terms of appellation, but do not represent a spatial arrangement or time sequence, etc. of these elements, and these elements should not be limited by these terms. The term "and/or" includes any and all combinations of one or more of the associated listed terms. The terms "include/contain", "comprise" and "have", etc. refer to the presence of stated features, elements, members or components, but do not preclude the presence or addition of one or more other features, elements, members or components.

In the embodiments of the present disclosure, the singular forms "a/an" and "the", etc. include plural forms, and should be understood broadly as "a kind of" or "a type of", but are not defined as the meaning of "one"; in addition, the term "the" should be understood to include both the singular forms and the plural forms, unless the context clearly indicates otherwise. In addition, the term "according to" should be understood as "at least partially according to......", the term "based on" should be understood as "at least partially based on......", unless the context clearly indicates otherwise.

In the embodiments of the present disclosure, the term "a communication network" or "a wireless communication network" may refer to a network that meets any of the following communication standards, such as New Radio (NR), Long Term Evolution (LTE), LTE-Advanced (LTE-A), Wideband Code Division Multiple Access (WCDMA), High-Speed Packet Access (HSPA) and so on.

And, communication between devices in a communication system may be carried out according to a communication protocol at any stage, for example may include but be not limited to the following communication protocols: 1G (generation), 2G, 2.5G, 2.75G, 3G, 4G, 4.5G, and future 5G, 6G and so on, and/or other communication protocols that are currently known or will be developed in the future.

In the embodiments of the present disclosure, the term "a network device" refers to, for example, a device that accesses a terminal equipment in a communication system to a communication network and provides services to the terminal equipment. The network device may include but be not limited to the following devices: a Base Station (BS), an Access Point (AP), a Transmission Reception Point (TRP), a broadcast transmitter, a Mobile Management Entity (MME), a gateway, a server, a Radio Network Controller (RNC), a Base Station Controller (BSC) and so on.

The base station may include but be not limited to: a node B (NodeB or NB), an evolution node B (eNodeB or eNB) and a 5G base station (gNB), etc., and may further includes a Remote Radio Head (RRH), a Remote Radio Unit (RRU), a relay or a low power node (such as femto, pico, etc.). And the term "BS" may include their some or all functions, each BS may provide communication coverage to a specific geographic region. The term "a cell" may refer to a BS and/or its coverage area, which depends on the context in which this term is used.

In the embodiments of the present disclosure, the term "a User Equipment (UE)" refers to, for example, a device that accesses a communication network and receives network services through a network device, or may also be called "Terminal Equipment (TE)". The terminal equipment may be fixed or mobile, and may also be called a Mobile Station (MS), a terminal, a user, a Subscriber Station (SS), an Access Terminal (AT) and a station and so on.

The terminal equipment may include but be not limited to the following devices: a Cellular Phone, a Personal Digital Assistant (PDA), a wireless modem, a wireless communication device, a handheld device, a machine-type communication device, a laptop computer, a cordless phone, a smart phone, a smart watch, a digital camera and so on.

For another example, under a scenario such as Internet of Things (IoT), the terminal equipment may also be a machine or apparatus for monitoring or measurement, for example may include but be not limited to: a Machine Type Communication (MTC) terminal, a vehicle-mounted communication terminal, a Device to Device (D2D) terminal, a Machine to Machine (M2M) terminal and so on.

A routing function of an IAB system is implemented by a BAP layer, each IAB-node stores a routing configuration (BH routing configuration) and an RLC channel mapping configuration (BH RLC Channel Mapping Configuration). A BAP entity performs routing according to the routing configuration, the RLC channel mapping configuration, and a routing identifier (Routing ID) in a BAP layer data packet header. The Routing ID contains a destination BAP address and a path identifier.

The routing configuration contains a mapping relationship between the Routing ID and a BAP address of a next-hop node. The RLC channel mapping configuration contains a mapping relationship among a BAP address of a prior-hop node, an ingress link RLC channel ID, a BAP address of a next-hop node and an egress link RLC channel ID.

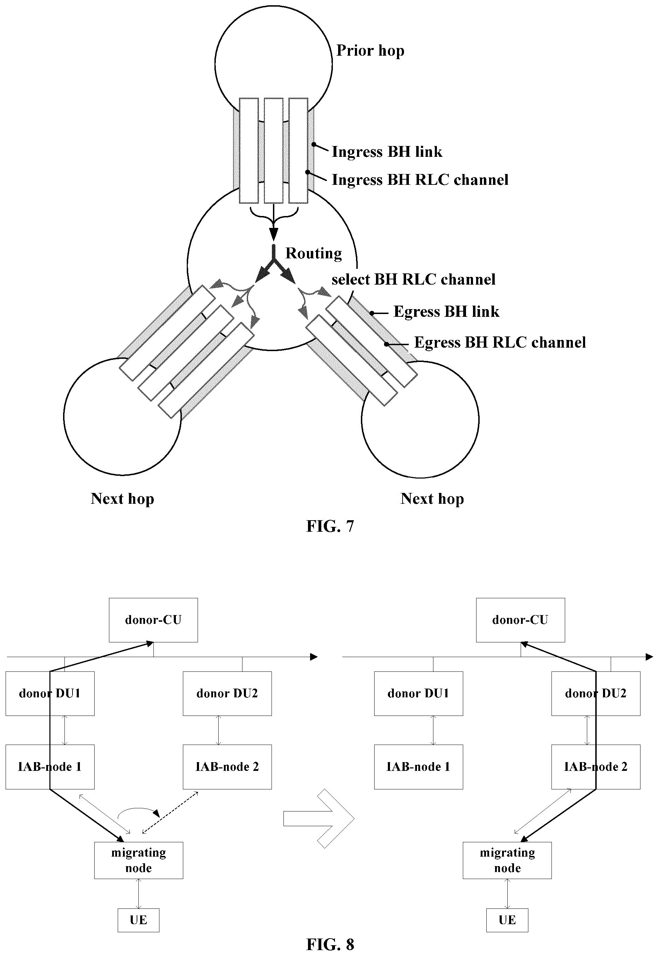

FIG. 7 is a schematic diagram of IAB system routing. As shown in FIG. 7, for each data packet, a BAP address of a next-hop node may be found from a routing configuration via a routing ID of a data packet header. A BAP address of a prior-hop node and an ingress link RLC channel ID are all known. In this way, after the BAP address of the next-hop node is determined, an egress link RLC channel ID can be found via an RLC channel mapping configuration according to the BAP address of the prior-hop node + the ingress link RLC channel ID + the BAP address of the next-hop node.

The IAB-donor DU stores a routing configuration (BH routing configuration) and a downlink RLC channel mapping configuration (Downlink Traffic to BH RLC Channel Mapping Configuration). The IAB-donor DU performs routing according to the routing configuration, the RLC channel mapping configuration, and Routing ID in a BAP layer data packet header. The routing configuration contains a mapping relationship between the Routing ID and an address of the next-hop node. The downlink RLC channel mapping configuration contains a mapping relationship among a target IP address, a Differentiated Service Code Point (DSCP), an address of a next-hop node and an egress link RLC channel ID.

For each downlink data packet that reaches the lAB-donor DU, the IAB-donor DU may find an address of a next-hop node from a routing configuration according to Routing ID in a data packet header. In this way, after the address of the next-hop node is determined, an egress link RLC channel ID is found from the downlink RLC channel mapping configuration according to an IP address of a data packet, and the DSCP.

An access IAB-node stores uplink backhaul information (BH information), including a routing ID used by a traffic, an uplink backhaul RLC channel ID, and an address of a next-hop node. The access IAB-node configures a routing ID in a BAP layer data packet header of an uplink traffic according to an uplink BH information and selects a BH RLC channel and a next-hop node for uplink traffic transmission.

The above text schematically describes routing of an IAB system and BH RLC channel mapping, the following text describes updating of a network topology of the IAB system. Rel-16 NR has standardized a process of topology adaptation when an IAB-node moves under the same donor-CU.

FIG. 8 is a schematic diagram of intra-CU topology adaptation. When an IAB-node changes a parent node (changing from IAB-node 1 to IAB-node 2), the donor-CU configures a configuration related to path migration for the IAB-node via an RRC reconfiguration message, so that the IAB-node performs migration of an F1 transmission path.

A configuration related to path migration includes updating a default BH RLC channel of uplink F1-C, F 1-U and non-F1 data, updating a default BAP routing ID, and updating an IP address routed to a Donor-DU. When the IAB-node is accessed to a new parent node, the IAB-node starts to apply the configuration related to path migration. For a child node of the IAB-node, the configuration related to path migration is carried out also using the same method.

3GPP Rel-17 supports network topology updating and a backhaul (BH) Radio Link Failure (RLF) recovery procedure when an IAB-node moves under different donor-CUs, the IAB-node may be handed over or re-established from a parent node served by a source donor-CU (which may also be called an F1-terminating CU or a first donor-CU) to a parent node served by a target donor-CU (which may also be called a non-F1-terminating CU or a second donor-CU), all traffics of the IAB-node (and traffics of its child node) need to be migrated to a topology of the non-F1-terminating CU. Rel-17 further supports a topology redundancy procedure when the IAB-node establishes dual connection with the non-F 1-terminating CU, and a transmission path of some traffics of the IAB-node may be migrated to a topology of the non-F1-terminating CD.

After the IAB-node is handed over or performs RLF recovery from donor-CU 1 (F1-terminating CU) to donor-CU 2 (non-F1-terminating CU), or adds RRC connection with donor-CU 2, only the RRC of the IAB-MT is connected to donor-CU 2, the F1 interface still terminates at donor- CU 1, at this case, the IAB-Node may also be called a boundary node. RRC connection of its served child node and UE still belongs to donor-CU 1, the F1 interface of the child node also terminates at donor-CU 1. Therefore, a child node of the boundary node still belongs to the topology of donor-CU 1.

In order for an uplink traffic of the child node to be transmitted in a topology of donor-CU 2, the boundary node needs to replace the routing ID of the uplink traffic belonging to the topology of donor-CU 1 (the destination address is a donor-DU BAP address of donor-CU 1) with the routing ID belonging to the topology of donor-CU 2 (the destination address is a donor-DU BAP address of donor-CU 2). In order for a downlink traffic of the child node to be transmitted in a topology of donor-CU 2, the boundary node replaces the routing ID of the downlink traffic belonging to the topology of donor-CU 2 (the destination address is a donor-DU BAP address of donor-CU 2) with the routing ID belonging to the topology of donor-CU 1 (the destination address is a donor-DU BAP address of donor-CU 1). An uplink traffic of the boundary node itself needs to be updated to the routing ID belonging to the topology of donor-CU 2.

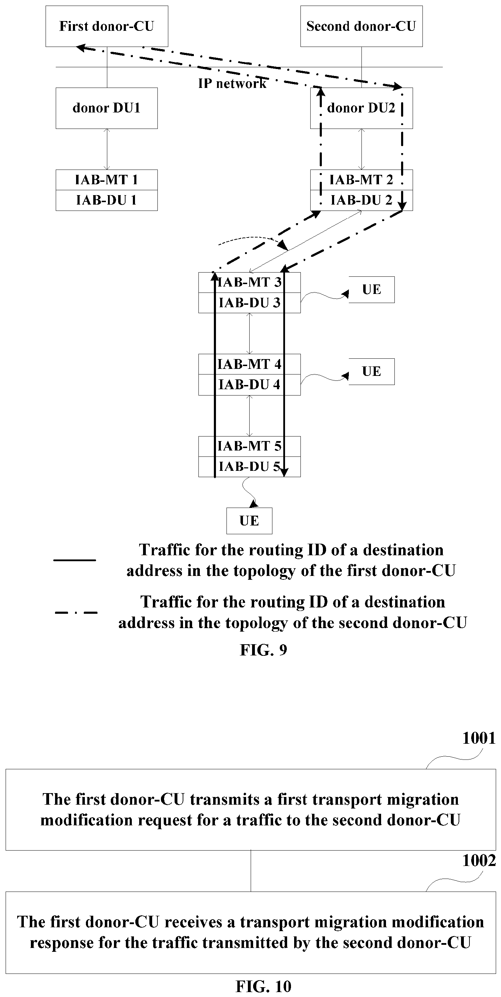

FIG. 9 is a schematic diagram of transport migration in the embodiments of the present disclosure. As shown in FIG. 9, an IAB-MT of IAB-node 3 is migrated from donor-CU 1 to donor-CU 2. If a traffic of a child node is migrated to the topology of donor-CU 2, a network device will configure a routing ID mapping relationship (such as BAP Header Rewriting information) between topologies to the boundary node.

When the boundary node forwards uplink data to a parent node in the topology of donor-CU2, after the routing ID belonging to donor-CU 1 is replaced with the routing ID belonging to donor-CU2, routing selection and BH RLC channel selection need to be performed according to the replaced routing ID, thus the network device will configure a routing table belonging to the topology of donor-CU 2 for the boundary node (before handover, only a routing table in the topology of donor-CU 1 is configured at the boundary node) and a BH RLC channel mapping table from the topology of donor-CU 1 to the topology of donor-CU 2.

Similarly, when forwarding downlink data, routing and BH RLC channel selection need to be performed according to the replaced routing ID, thus the network device will configure the boundary node with a downlink BH RLC channel mapping table from the topology of donor-CU 2 to the topology of donor-CU 1.

If a traffic of the boundary node is migrated to the topology of donor-CU 2, the network device needs to configure uplink backhaul information belonging to the topology of donor-CU 2 at the boundary node, including a routing ID, an uplink backhaul RLC channel ID, and an address of a next-hop node.

If transport of some or all of the traffics is migrated to the topology of donor-CU 2, resources serving for the traffics need to be established in the topology of donor-CU 2, for example, the backhaul BH RLC channel and/or BAP sublayer routing used on a path in the topology of donor-CU 1 are/is configured for the traffics.

In order to configure the boundary node with a routing table belonging to the topology of donor-CU 2 and a BH RLC channel mapping table between two donor-CU topologies and to establish a resource serving for a migrated traffic in the topology of donor-CU 2, donor-CU 1 transmits a transport migration establishment request to donor-CU 2.

Donor-CU 1 transmits the following information to donor-CU 2 for each traffic flow that requests migration, and an IP address request (including a donor-DU BAP address in the topology of donor-CU 1, and an IP address anchored at this donor-DU):
- a traffic identifier;
- Quality of Service (QoS) information of a traffic or a traffic type;
- for a traffic flow of a child node, a routing ID and a BH RLC channel (including an egress routing ID and an egress BH RLC channel of a downlink traffic, an ingress routing ID and an ingress BH RLC channel of an uplink traffic) in the topology of donor-CU 1 further need to be transmitted.

Donor-CU 2 transmits the following information (for each traffic flow) and an IP address response (including a donor-DU BAP address in the topology of donor-CU 1, and an IP address anchored at a donor-DU of donor-CU 2) to donor-CU 1:
- a traffic identifier;
- a routing ID and a BH RLC channel (including an ingress routing ID and an ingress BH RLC channel of a downlink traffic, or, an egress routing ID and an egress BH RLC channel of an uplink traffic) of a traffic in the topology of donor-CU 2;
- a prior-hop BAP address of a downlink traffic in the topology of donor-CU 2;
- a next-hop BAP address of an uplink traffic in the topology of donor-CU 2;
- QoS mapping information (such as DSCP or a flow label of IPv6) used by a downlink traffic.

In the embodiments of the present disclosure, the IAB-node device includes a migrating node or its child node, unless otherwise specified. In addition, "a resource serving for a traffic of the IAB-node has been established in a topology of a donor-CU" may also be referred to as "a traffic of the IAB-node is migrated to a topology of a donor-CU", etc., the present disclosure is not limited to these expressions. The embodiments of the present disclosure are further described below.

### Embodiments of a first aspect

The embodiments of the present disclosure provide a transport migration management method, which is described from a first donor centralized unit (donor-CU). An IAB-DU of an IAB-node maintains F1 connection with a first donor centralized unit (donor-CU), and a resource serving for a traffic of the IAB-node has been established in a topology of a second donor-CU.

FIG. 10 is a schematic diagram of a transport migration management method in the embodiments of the present disclosure. As shown in FIG. 10, the method includes:
1001, the first donor-CU transmits a first transport migration modification request for the traffic to the second donor-CU; and
1002, the first donor-CU receives a transport migration modification response for the traffic transmitted by the second donor-CU.

It should be noted that the above FIG. 10 is only schematic description of the embodiments of the present disclosure, but the present disclosure is not limited to this. For example, an execution step of each operation can be adjusted appropriately, moreover other some operations can be increased or reduced. Persons skilled in the art can make appropriate modifications according to the above contents, not limited to the records in the above FIG. 10.

In some embodiments, the IAB-MT of the IAB-node maintains an RRC connection with the second donor-CU; for example, an IAB-MT of a migrating node maintains an RRC connection with the second donor-CU. Or, the IAB-MT of the IAB-node maintains an RRC connection with the first donor-CU; for example, a child node of the migrating node maintains an RRC connection with the first donor-CU.

In some embodiments, the traffic includes at least one or a combination of the following: an F1 control plane (F1-C) traffic, an F1 user plane (F1-U) traffic, or a non-F1 traffic; the embodiments of the present disclosure are not limited to this.

In some embodiments, the first donor-CU transmits to the second donor-CU a first transport migration modification request used for requesting to modify the resource serving for the traffic in the topology of the second donor-CU.

For example, in a case where a service parameter of a traffic is changed, the first donor-CU transmits to the second donor-CU a first transport migration modification request used for requesting to modify the resource serving for the traffic in the topology of the second donor-CU. For example, the service parameter includes QoS (user plane traffics) and/or a traffic type (non-user plane traffics). The first transport migration modification request includes the following information: a traffic identifier of the traffic, quality of service (QoS) and/or a traffic type of the traffic.

In some embodiments, the first donor-CU receives a transport migration modification response used for modifying a resource serving for the traffic in the topology of the second donor-CU, transmitted by the second donor-CU.

For example, the transport migration modification response includes the following information: the traffic identifier of the traffic, and BH information of the traffic in the topology of the second donor-CU.

In some embodiments, the BH information in the topology of the second donor-CU includes at least one of the following:
an ingress routing identifier (routing ID) of a downlink traffic;
an ingress BH RLC channel of the downlink traffic;
a prior-hop BAP address of the downlink traffic; or
QoS mapping information of the downlink traffic.

In some embodiments, the BH information in the topology of the second donor-CU includes at least one of the following:
an egress routing identifier (routing ID) of an uplink traffic;
an egress BH RLC channel of the uplink traffic; or
a next-hop BAP address of the uplink traffic.

In some embodiments, the first donor-CU transmits a first transport migration modification request via a first TRANSPORT MIGRATION MANAGEMENT REQUEST message, and/or, the first donor-CU receives a transport migration modification response via a TRANSPORT MIGRATION MANAGEMENT RESPONSE message. However, the present disclosure is not limited to this, other messages may also carry a transport migration modification request and/or a transport migration modification response.

Thereby, through the first transport migration modification request and the transport migration modification response, a transport resource serving for a migration traffic can be modified according to a change of a service parameter of the traffic, so that service requirements of the traffic can still be met after the service parameter of the traffic is changed.

The following text schematically describes the cases after the first donor-CU receives a transport migration modification response for a traffic.

In some embodiments, the first donor-CU, after receiving a transport migration modification response for the traffic, for example, for a traffic of an IAB-node, configures the IAB-node with updated uplink BH information for the traffic.

In some embodiments, after receiving a transport migration modification response for the traffic, for example, for an uplink traffic of a child node, the first donor-CU configures the IAB-node to update at least one of the following: BAP header rewriting information between topologies in an uplink direction, routing information in a topology of the second donor-CU, or BH RLC channel mapping information between topologies in the uplink direction.

In some embodiments, after receiving a transport migration modification response for the traffic, for example, for a downlink traffic of a child node, the first donor-CU configures the IAB-node to update at least one of the following: BAP header rewriting information between topologies in a downlink direction, or BH RLC channel mapping information between topologies in the downlink direction.

The above text describes the cases of layer 2 (L2)-related configuration, and the following text describes the cases of IP addresses.

In some embodiments, the first donor-CU transmits to the second donor-CU a first transport migration modification request used for requesting to modify an IP address for the IAB-node.

For example, in a case where a routing ID and/or a donor distributed unit (donor-DU) of a traffic of a child node in a topology of the first donor-CU is changed, the first donor-CU transmits to the second donor-CU a first transport migration modification request used for requesting to modify an IP address for the child node.

In some embodiments, the first transport migration modification request is included in a first transport migration management request message.

In some embodiments, the first transport migration modification request includes the following information: an IAB-node identifier or an IP address request index, a BAP address of a donor-DU in a topology of the first donor-CU. Optionally, the IP address request may further include: an IP address anchored at the donor-DU.

In some embodiments, the first donor-CU receives a transport migration modification response used for modifying an IP address for the IAB-node, transmitted by the second donor-CU.

In some embodiments, the transport migration modification response is included in a transport migration management response message.

In some embodiments, the transport migration modification response includes the following information: an IAB-node identifier or IP address request index, a BAP address of a donor-DU in the topology of the first donor-CU, and an IP address anchored at the donor-DU in the topology of the second donor-CU.

In some embodiments, after receiving a transport migration modification response for the IAB-node, the first donor-CU configures the IAB-node with an IP address anchored at a donor-DU in the topology of the second donor-CU.

In the embodiments of the present disclosure, "IP address anchored at IAB donor-DU" may be understood as "an IP address assigned by the donor-DU" or "Transport Network Layer (TNL) address(es) that is (are) routable via the IAB-donor-DU", the terms are interchangeable, the present disclosure is not limited to this.

The above text describes the cases in which the second donor-CU receives a transport migration modification response. If the second donor-CU determines that it cannot receive the transport migration modification request, for example, QoS requirements of a traffic cannot be met after modification, the transport migration modification request may be rejected.

In some embodiments, the first donor-CU receives a transport migration modification response used for rejecting a first transport migration modification request for the traffic, transmitted by the second donor-CU.

For example, the first donor-CU receives the transport migration modification response via a transport migration management response message. For another example, the transport migration management response message includes the traffic identifier of the traffic.

The following text further exemplarily describes a transport migration modification procedure initiated by the first donor-CU, through signaling interaction.

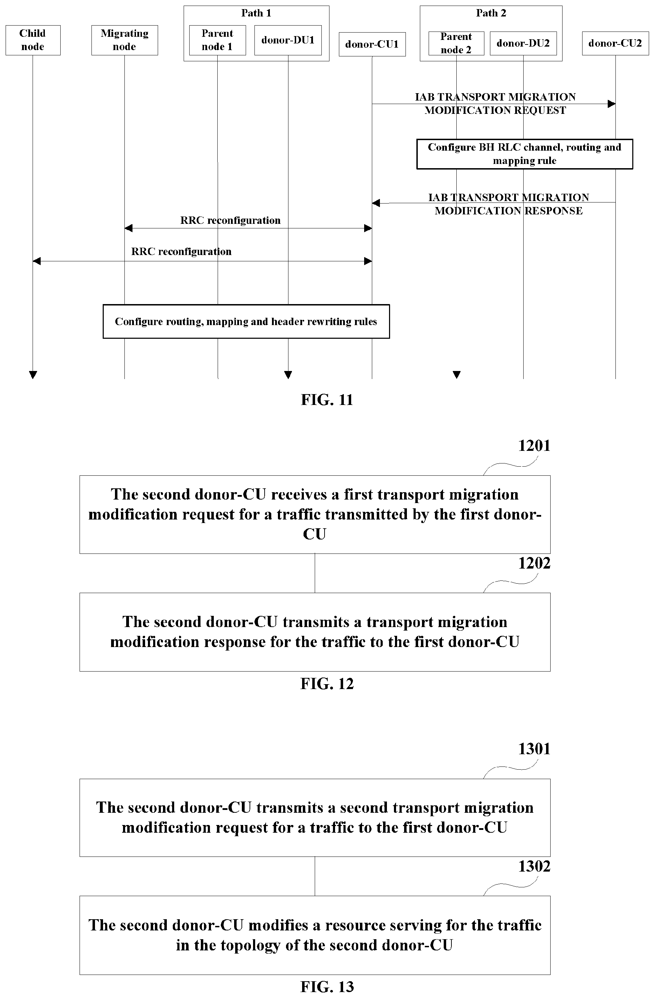

FIG. 11 is a signaling flow graph of transport migration modification in the embodiments of the present disclosure. For example, when the QoS of a traffic is changed, donor-CU 1 needs to update the QoS of a migration traffic, and donor-CU 1 requests to modify the QoS of the migration traffic.
- donor-CU 1 transmits at least one of the following information (for each traffic flow that requests modification) to donor-CU 2 via a TRANSPORT MIGRATION MANAGEMENT REQUEST message or a TRANSPORT MIGRATION MODIFICATION REQUEST message:
   -- a traffic identifier;
   -- QoS information of a traffic, or a traffic type.

After the QoS of the traffic is modified, a routing ID of the traffic in the topology donor-CU 1 and a donor-DU in the topology of donor-CU 1 may also possibly change, therefore an IP address request for a boundary node and a child node (for example may be included in the above request message) may further be transmitted, including:
-- a node identifier or an IP address request index;
- an IP address request (including a new donor-DU BAP address in the topology of donor-CU 1), optionally, it may further include an IP address anchored at this donor-DU.

- donor-CU 2 receives a transport migration modification request and updates a BH RLC channel and routing of a traffic on a path in the topology of donor-CU 2 based on the QoS of a modified traffic; donor-CU 2 may possibly modify a routing ID or BH RLC channel of a traffic in the topology of donor-CU 2, or downlink QoS mapping information (such as a DSCP value or a flow label of IPv6).
- donor-CU 2 may transmit at least one of the following information (for each traffic flow that requests modification) to donor-CU 1 via a TRANSPORT MIGRATION MANAGEMENT RESPONSE message or a TRANSPORT MIGRATION MODIFICATION RESPONSE message:
   -- a traffic identifier;
   -- a routing ID and a BH RLC channel (including an ingress routing ID and an ingress BH RLC channel of a downlink traffic, an egress routing ID and an egress BH RLC channel of an uplink traffic) of a traffic in the topology of donor-CU 2;
   -- a prior-hop BAP address of a downlink traffic in the topology of donor-CU 2;
   -- a next-hop BAP address of an uplink traffic in the topology of donor-CU 2;
   - QoS mapping information (such as DSCP or a flow label of IPv6) used by a downlink traffic.

If donor-CU 2 receives an IP address request, it further needs to transmit an IP address response (which may be included in the above response message, for example), including:
- a node identifier or an IP address request index;
- an IP address response (including a new donor-DU BAP address in the topology of donor-CU 1, and an IP address anchored at a donor-DU of donor-CU 2).

- If donor-CU 2 determines that QoS requirements of a traffic cannot be met after modification, the transport migration modification request may be rejected, and donor-CU 2 transmits a traffic identifier for rejecting the modification to donor-CU 1.
- If donor-CU 2 transmits a transport migration modification successful response to donor-CU 1, donor-CU 1 needs to make the following updating based on the above information transmitted by donor-CU 2:
   - donor-CU 1 updates QoS mapping information of a traffic.
   -- L2 configuration information, including:
      --- for a traffic of a migrating node, donor-CU 1 configures the migrating node and updates uplink BH information of the traffic.
      --- for a traffic of a child node, donor-CU 1 configures the migrating node and updates BAP header rewriting information between topologies, a routing table belong to the topology of donor-CU2, and a BH RLC channel mapping table between two topologies.
   -- If an IP address response is received, donor-CU1 further updates the IP address of the migrating node and/or one or more child nodes via an RRC reconfiguration message.

Description is made above by taking QoS modification as an example, however the present disclosure is not limited to this.

For another example, donor-CU 1 needs to modify a donor-DU of a traffic in the topology of donor-CU 1, or, modifying a routing ID of the traffic in the topology of donor-CU 1 results in changing the donor-DU.
- donor-CU 1 transmits an IP address request to donor-CU 2, including:
   - a node identifier or an IP address request index;
   - an IP address request (including a new donor-DU BAP address in the topology of donor-CU 1), optionally, it may further include an IP address anchored at this donor-DU.
- donor-CU 2 transmits an IP address response to donor-CU 1, including:
   - a node identifier or an IP address request index;
   - an IP address response (including a new donor-DU BAP address in the topology of donor-CU 1, and an IP address anchored at a donor-DU of donor-CU 2).

The above signaling process only schematically describes the embodiments of the present disclosure, but the present disclosure is not limited to this. For more specific contents about signaling, relevant technologies may be further referred to. Moreover, for example, an execution step of each operation can be adjusted appropriately, moreover other some operations can be increased or reduced. Persons skilled in the art can make appropriate modifications according to the above contents, not limited to the records in the above FIG. 11.

In some embodiments, in a case where an IAB-MT of an IAB-node is handed over from the first donor-CU to the second donor-CU, and a resource serving for one or more traffics of the IAB-node (including a migrating node and its child node) has been established in a topology of a second donor-CU, the first donor-CU transmits a first transport migration modification request for the one or more traffics.

For example, a transport migration modification procedure initiated by donor-CU 1 may be performed after the migrating node is handed over from a parent node under F 1-terminating CU to a parent node under non-F 1-terminating CU, and all traffics are migrated to the topology of non-F 1-terminating CU.

In some embodiments, in a case where an IAB-MT of an IAB-node is reestablished from the first donor-CU to the second donor-CU, and a resource serving for one or more traffics of the IAB-node (including a migrating node and its child node) has been established in a topology of a second donor-CU, the first donor-CU transmits a first transport migration modification request for the one or more traffics.

For example, a transport migration modification procedure initiated by donor-CU 1 may be performed after the migrating node is reestablished from a parent node under F1-terminating CU to a parent node under non-F 1-terminating CU, and all traffics are migrated to the topology of non-F 1-terminating CU.

In some embodiments, in a case where an IAB-MT of an IAB-node establishes dual-connection with the first donor-CU and the second donor-CU, and a resource serving for one or more traffics of the IAB-node (including a migrating node and its child node) has been established in a topology of a second donor-CU, the first donor-CU transmits a first transport migration modification request for the one or more traffics.

For example, a transport migration modification procedure initiated by donor-CU 1 may be performed after the migrating node establishes dual-connection with F 1-terminating CU and non-F 1-terminating CU, and transmission paths of some traffics are migrated to the topology of non-F 1-terminating CU.

Each of the above embodiments is only illustrative for the embodiments of the present disclosure, but the present disclosure is not limited to this, appropriate modifications can be also made based on the above each embodiment. For example, each of the above embodiments may be used individually, or one or more of the above embodiments may be combined.

As can be known from the above embodiments, a first donor-CU transmits a first transport migration modification request for a traffic to a second donor-CU; and the first donor-CU receives a transport migration modification response for the traffic transmitted by the second donor-CU. Thereby, the second donor-CU can modify a transmission resource serving for a migration traffic according to a change of a service parameter of the traffic, so that service requirements of the traffic can still be met after the service parameter of the traffic is changed.

### Embodiments of a second aspect

The embodiments of the present disclosure provide a transport migration management method, which is described from a second donor-CU. The contents same as the embodiments of the first aspect are not repeated. An IAB-DU of an IAB-node maintains F1 connection with a first donor-CU, and a resource serving for a traffic of the IAB-node has been established in a topology of a second donor-CU.

FIG. 12 is another schematic diagram of a transport migration management method in the embodiments of the present disclosure. As shown in FIG. 12, the method includes:
1201, the second donor-CU receives a first transport migration modification request for the traffic transmitted by the first donor-CU; and
1202, the second donor-CU transmits a transport migration modification response for the traffic to the first donor-CU.

It should be noted that the above FIG. 12 is only schematic description of the embodiments of the present disclosure, but the present disclosure is not limited to this. For example, an execution step of each operation can be adjusted appropriately, moreover other some operations can be increased or reduced. Persons skilled in the art can make appropriate modifications according to the above contents, not limited to the records in the above FIG. 12.

In some embodiments, the IAB-MT of the IAB-node maintains an RRC connection with the second donor-CU, or the IAB-MT of the IAB-node maintains an RRC connection with the first donor-CU.

In some embodiments, the traffic includes at least one or a combination of the following: an F1 control plane (F 1-C) traffic, an F1 user plane (F 1-U) traffic, or a non-F1 traffic.

In some embodiments, the second donor-CU receives a first transport migration modification request used for requesting to modify the resource serving for the traffic in the topology of the second donor-CU, transmitted by the first donor-CU.

For example, in a case where a service parameter of the traffic is changed, the second donor-CU receives a first transport migration modification request used for requesting to modify the resource serving for the traffic in the topology of the second donor-CU, transmitted by the first donor-CU.

In some embodiments, the second donor-CU receives the first transport migration modification request via a first TRANSPORT MIGRATION MANAGEMENT REQUEST message.

In some embodiments, the first transport migration modification request includes the following information: a traffic identifier of the traffic, quality of service (QoS) and/or a traffic type of the traffic.

In some embodiments, the second donor-CU updates QoS mapping information of the traffic after receiving the first transport migration modification request.

In some embodiments, the second donor-CU updates L2-related configuration of the traffic after receiving the first transport migration modification request, including at least one of the following:
a backhaul (BH) radio link control (RLC) channel and/or BAP sublayer routing used on a path in the topology of the second donor-CU;
uplink BH information of the traffic, wherein the uplink BH information includes a routing identifier, an uplink BH RLC channel and/or a BAP address of a next-hop node; or
an uplink egress routing identifier, an egress BH RLC channel and/or a BAP address of a next-hop node of the traffic;
or, a downlink ingress routing identifier, an ingress BH RLC channel and/or a BAP address of a prior-hop node of the traffic.

In some embodiments, the second donor-CU transmits to the first donor-CU a transport migration modification response used for modifying the resource serving for the traffic in the topology of the second donor-CU.

In some embodiments, the second donor-CU transmits the transport migration modification response via a TRANSPORT MIGRATION MANAGEMENT RESPONSE message.

In some embodiments, the transport migration modification response includes the following information: the traffic identifier of the traffic, and BH information of the traffic in the topology of the second donor-CU.

In some embodiments, the BH information in the topology of the second donor-CU includes at least one of the following:
an ingress routing identifier (routing ID) of a downlink traffic;
an ingress BH RLC channel of the downlink traffic;
a prior-hop BAP address of the downlink traffic; or
QoS mapping information of the downlink traffic.

In some embodiments, the BH information in the topology of the second donor-CU includes at least one of the following:
an egress routing identifier (routing ID) of an uplink traffic;
an egress BH RLC channel of the uplink traffic; or
a next-hop BAP address of the uplink traffic.

In some embodiments, the second donor-CU receives a first transport migration modification request used for requesting to modify an IP address for the IAB-node, transmitted by the first donor-CU.

For example, in a case where a routing ID and/or a donor distributed unit (donor-DU) of the traffic in a topology of the first donor-CU is changed, the second donor-CU receives a first transport migration modification request used for requesting to modify an IP address for the IAB-node, transmitted by the first donor-CU.

In some embodiments, the first transport migration modification request is included in a first transport migration management request message.

In some embodiments, the first transport migration modification request includes the following information: an IAB-node identifier or an IP address request index, a BAP address of a donor-DU in a topology of the first donor-CU.

In some embodiments, the first transport migration modification request further includes: an IP address anchored at the donor-DU.

In some embodiments, the second donor-CU transmits to the first donor-CU a transport migration modification response used for modifying an IP address for the IAB-node.

In some embodiments, the transport migration modification response is included in a transport migration management response message.

In some embodiments, the transport migration modification response includes the following information: an IAB-node identifier or IP address request index, a BAP address of a donor-DU in the topology of the first donor-CU, and an IP address anchored at the donor-DU in the topology of the second donor-CU.

In some embodiments, the second donor-CU rejects a first transport migration modification request for the traffic after receiving the first transport migration modification request.

For example, in a case where quality of service (QoS) of the traffic cannot be satisfied, the second donor-CU rejects a first transport migration modification request for the traffic after receiving the first transport migration modification request.

In some embodiments, the second donor-CU transmits to the first donor-CU a transport migration modification response used for rejecting a transport migration modification request for the traffic.

In some embodiments, the second donor-CU transmits the transport migration modification response via a transport migration management response message.

In some embodiments, the transport migration modification response includes the traffic identifier of the traffic.

Each of the above embodiments is only illustrative for the embodiments of the present disclosure, but the present disclosure is not limited to this, appropriate modifications can be also made based on the above each embodiment. For example, each of the above embodiments may be used individually, or one or more of the above embodiments may be combined.

As can be known from the above embodiments, a first donor-CU transmits a first transport migration modification request for a traffic to a second donor-CU; and the first donor-CU receives a transport migration modification response for the traffic transmitted by the second donor-CU. Thereby, the second donor-CU can modify a transmission resource serving for a migration traffic according to a change of a service parameter of the traffic, so that service requirements of the traffic can still be met after the service parameter of the traffic is changed.

### Embodiments of a third aspect

The embodiments of the present disclosure provide a transport migration management method, which is described from a second donor centralized unit (donor-CU) side. An IAB-DU of an IAB-node maintains F1 connection with a first donor centralized unit (donor-CU), and a resource serving for a traffic of the IAB-node has been established in a topology of a second donor-CU.

FIG. 13 is a schematic diagram of a transport migration management method in the embodiments of the present disclosure. As shown in FIG. 13, the method includes:
1301, the second donor-CU transmits a second transport migration modification request for a traffic to the first donor-CU; and
1302, the second donor-CU modifies a resource serving for the traffic in the topology of the second donor-CU.

It should be noted that the above FIG. 13 is only schematic description of the embodiments of the present disclosure, but the present disclosure is not limited to this. For example, an execution step of each operation can be adjusted appropriately, moreover other some operations can be increased or reduced. Persons skilled in the art can make appropriate modifications according to the above contents, not limited to the records in the above FIG. 13.

In some embodiments, the IAB-MT of the IAB-node maintains an RRC connection with the second donor-CU; for example, an IAB-MT of a migrating node maintains an RRC connection with the second donor-CU. Or, the IAB-MT of the IAB-node maintains an RRC connection with the first donor-CU; for example, a child node of the migrating node maintains an RRC connection with the first donor-CU.

In some embodiments, the traffic includes at least one or a combination of the following: an F1 control plane (F1-C) traffic, an F1 user plane (F1-U) traffic, or a non-F1 traffic; the embodiments of the present disclosure are not limited to this.

In some embodiments, the second donor-CU transmits to the first donor-CU the second transport migration modification request used for modifying a routing ID and/or a BH RLC channel of the traffic in the topology of the second donor-CU.

In some embodiments, the second transport migration modification request includes the following information: the traffic identifier of the traffic, and BH information of the traffic in the topology of the second donor-CU.

In some embodiments, the BH information in the topology of the second donor-CU includes at least one of the following:
an egress routing identifier (routing ID) of an uplink traffic;
an egress BH RLC channel of the uplink traffic; or
a next-hop BAP address of the uplink traffic.

In some embodiments, the BH information in the topology of the second donor-CU includes at least one of the following:
an ingress routing identifier (routing ID) of a downlink traffic;
an ingress BH RLC channel of the downlink traffic; or
a prior-hop BAP address of the downlink traffic.

In some embodiments, the second donor-CU transmits the second transport migration modification request via a second TRANSPORT MIGRATION MANAGEMENT REQUEST message. However, the present disclosure is not limited to this, other messages may also carry a transport migration modification request.

Thereby, when the second donor-CU modifies a resource serving for the traffic, the first donor-CU can modify L2-related information of the traffic via the second transport migration modification request, so as to guarantee normal transmission of a migration traffic in the topology of the second donor-CU.

The following text schematically describes the cases after the second donor-CU transmits a transport migration modification request for a traffic.

In some embodiments, the second donor-CU modifies a resource serving for the traffic in the topology of the second donor-CU, including that the second donor-CU updates L2-related information of the traffic in the topology of the second donor-CU, for example, the L2-related information includes at least one of the following information:
a BH RLC channel and/or BAP sublayer routing used on a path in the topology of the second donor-CU;
uplink BH information of the traffic, wherein the uplink BH information includes a routing identifier, an uplink BH RLC channel and/or a BAP address of a next-hop node;
an uplink egress routing identifier, an egress BH RLC channel and/or a BAP address of a next-hop node of the traffic;
or, a downlink ingress routing identifier, an ingress BH RLC channel and/or a BAP address of a prior-hop node of the traffic.

The above text describes the cases of modification related to layer 2 (L2) information, and the following text describes the cases of IP addresses.

In some embodiments, the second donor-CU transmits to the first donor-CU a second transport migration modification request used for modifying an IP address for the IAB-node.

For example, in a case where a routing ID and/or a donor distributed unit (donor-DU) of the traffic (including a traffic of a migrating node or a traffic of a child node) in a topology of the second donor-CU is changed, the second donor-CU transmits to the first donor-CU a second transport migration modification request used for modifying an IP address for the IAB-node (including the migrating node and its child node).

In some embodiments, the second transport migration modification request is included in a second transport migration management request message.

In some embodiments, the second transport migration modification request includes the following information: an IAB-node identifier or IP address request index, a BAP address of a donor-DU in the topology of the first donor-CU or a BAP address of a donor-DU in the topology of the second donor-CU, and an IP address anchored at the donor-DU in the topology of the second donor-CU.

For example, for a traffic of a child node, the second transport migration modification request includes the following information: an IAB-node identifier or IP address request index, a BAP address of a donor-DU in the topology of the first donor-CU, and an IP address anchored at the donor-DU in the topology of the second donor-CU. For another example, for a traffic of a migrating node, the second transport migration modification request includes the following information: an IAB-node identifier or IP address request index, a BAP address of a donor-DU in the topology of the second donor-CU, and an IP address anchored at the donor-DU in the topology of the second donor-CU.

The following text further exemplarily describes a transport migration modification procedure initiated by the second donor-CU, through signaling interaction.

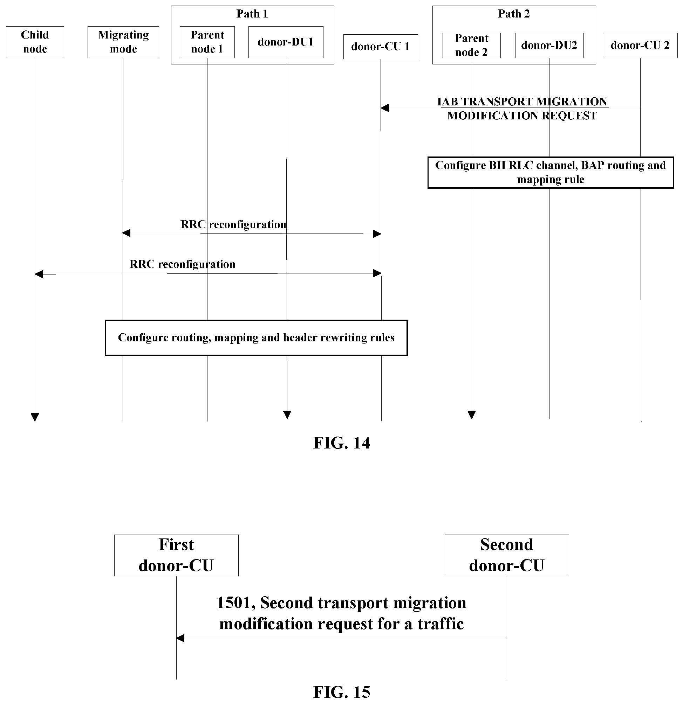

FIG. 14 is a signaling flow graph of transport migration modification in the embodiments of the present disclosure. For example, when a routing ID or BH RLC channel of a traffic in the topology of a donor-CU 2 changes, donor-CU 2 requests to modify a routing ID or BH RLC channel of a migration traffic, so that donor-CU 1 updates L2 information related to the traffic.
- donor-CU 2 may transmit the following information (for each traffic flow that requests modification) to donor-CU 1 via a TRANSPORT MIGRATION MANAGEMENT REQUEST message or a TRANSPORT MIGRATION MODIFICATION REQUEST message:
   -- a traffic identifier;
   -- a routing ID and a BH RLC channel (including an ingress routing ID and an ingress BH RLC channel of a downlink traffic, or, an egress routing ID and an egress BH RLC channel of an uplink traffic) of a traffic in the topology of donor-CU 2;
   -- a prior-hop BAP address of a downlink traffic in the topology of donor-CU 2;
   -- a next-hop BAP address of an uplink traffic in the topology of donor-CU 2.

Because after the routing ID of the traffic is changed, a donor-DU of the traffic in the topology of donor-CU 2 may be also possibly changed. donor-CU 2 may further possibly transmit an IP address indication (for example, which is included in the above request message), including:
- a node identifier or an IP address request index;
- an IP address indication (including a donor-DU BAP address in the topology of donor-CU 1, and an IP address anchored at a donor-DU of donor-CU 2).

- donor-CU 2 needs to update a BH RLC channel and routing on a path of a traffic in the topology of donor-CU 2, according to a new routing ID or BH RLC channel of the traffic in the topology of donor-CU 2.
- when receiving a transport migration modification request, donor-CU 1 may not need to respond, but only needs to update relevant configuration according to these information, including:
   -- updating L2-related information of the traffic, including:
      ---for a traffic of a migrating node, updating uplink BH information, including a routing identifier, a BH RLC channel ID and an address of a next-hop node.
      --- for a traffic of a child node, updating BAP header rewriting information between topologies, a routing table belong to the topology of donor-CU2, and a BH RLC channel mapping table between two topologies,
   -- or, updating IP addresses of the migrating node and the child node via an RRC reconfiguration message.

Description is made above by taking a change of L2-related information as an example, however the present disclosure is not limited to this.

For another example, donor-CU 2 needs to modify an IP address of a traffic, or, changing a donor-DU in the topology of donor-CU2 results in a need to update the IP address of the traffic.
- donor-CU 2 transmits an IP address indication to donor-CU 1, including:
   - a node identifier or an IP address request index;
   - an IP address indication (including a donor-DU BAP address in the topology of donor-CU 1 or a donor-DU BAP address in the topology of donor-CU 2, and an IP address anchored at a donor-DU of donor-CU 2).
- after receiving the above information, donor-CU 1 does not need to respond and only needs to update IP addresses of the migrating node and the child node via the RRC reconfiguration message.

The above signaling process only schematically describes the embodiments of the present disclosure, but the present disclosure is not limited to this. For more specific contents about signaling, relevant technologies may be further referred to. Moreover, for example, an execution step of each operation can be adjusted appropriately, moreover other some operations can be increased or reduced. Persons skilled in the art can make appropriate modifications according to the above contents, not limited to the records in the above FIG. 14.

In some embodiments, in a case where an IAB-MT of an IAB-node is handed over from the first donor-CU to the second donor-CU, and one or more resources serving for one or more traffics of the IAB-node (including a migrating node and its child node) has been established in a topology of a second donor-CU, the second donor-CU transmits a second transport migration modification request for the one or more traffics.

For example, a transport migration modification procedure initiated by donor-CU 2 may be performed after the migrating node is handed over from a parent node under F 1-terminating CU to a parent node under non-F 1-terminating CU, and all traffics are migrated to the topology of non-F 1-terminating CU.

In some embodiments, in a case where an IAB-MT of an IAB-node is reestablished from the first donor-CU to the second donor-CU, and one or more resources serving for one or more traffics of the IAB-node (including a migrating node and its child node) has been established in a topology of a second donor-CU, the second donor-CU transmits a second transport migration modification request for the one or more traffics.

For example, a transport migration modification procedure initiated by donor-CU 2 may be performed after the migrating node is reestablished from a parent node under F1-terminating CU to a parent node under non-F 1-terminating CU, and all traffics are migrated to the topology of non-F 1-terminating CU.

In some embodiments, in a case where an IAB-MT of an IAB-node establishes dual-connection with the first donor-CU and the second donor-CU, and one or more resources serving for one or more traffics of the IAB-node (including a migrating node and its child node) has been established in a topology of a second donor-CU, the second donor-CU transmits a second transport migration modification request for the one or more traffics.

For example, a transport migration modification procedure initiated by donor-CU 2 may be performed after the migrating node establishes dual-connection with F 1-terminating CU and non-F 1-terminating CU, and transmission paths of some traffics are migrated to the topology of non-F 1-terminating CU.

Each of the above embodiments is only illustrative for the embodiments of the present disclosure, but the present disclosure is not limited to this, appropriate modifications can be also made based on the above each embodiment. For example, each of the above embodiments may be used individually, or one or more of the above embodiments may be combined.

As can be known from the above embodiments, the second donor-CU transmits to the first donor-CU a second transport migration modification request for a traffic; and the second donor-CU modifies a resource serving for the traffic in the topology of the second donor-CU. Thereby, when the second donor-CU modifies a resource serving for the traffic or modifies an IP address of an IAB-node, the first donor-CU can modify L2-related information or IP address of the traffic, so as to guarantee normal transmission of a migration traffic in the topology of the second donor-CU.

### Embodiments of a fourth aspect

The embodiments of the present disclosure provide a transport migration management method, which is described from a first donor-CU. The contents same as the embodiments of the third aspect are not repeated. An IAB-DU of an IAB-node maintains F1 connection with a first donor-CU, and a resource serving for a traffic of the IAB-node has been established in a topology of a second donor-CU.

FIG. 15 is another schematic diagram of a transport migration management method in the embodiments of the present disclosure. As shown in FIG. 15, the method includes:
1501, the first donor-CU receives a second transport migration modification request for a traffic transmitted by the second donor-CU; wherein the second donor-CU modifies a resource serving for the traffic in the topology of the second donor-CU.

It should be noted that the above FIG. 15 is only schematic description of the embodiments of the present disclosure, but the present disclosure is not limited to this. For example, an execution step of each operation can be adjusted appropriately, moreover other some operations can be increased or reduced. Persons skilled in the art can make appropriate modifications according to the above contents, not limited to the records in the above FIG. 15.

In some embodiments, the first donor-CU receives the second transport migration modification request used for modifying a routing ID and/or a BH RLC channel of the traffic in the topology of the second donor-CU, transmitted by the second donor-CU.

In some embodiments, the first donor-CU receives the second transport migration modification request via a second TRANSPORT MIGRATION MANAGEMENT REQUEST message.

In some embodiments, the second transport migration modification request includes the following information: the traffic identifier of the traffic, and BH information of the traffic in the topology of the second donor-CU.

In some embodiments, the BH information in the topology of the second donor-CU includes at least one of the following:
an egress routing identifier (routing ID) of an uplink traffic;
an egress BH RLC channel of the uplink traffic; or
a next-hop BAP address of the uplink traffic.

In some embodiments, the BH information in the topology of the second donor-CU includes at least one of the following:
an ingress routing identifier (routing ID) of a downlink traffic;
an ingress BH RLC channel of the downlink traffic; or
a prior-hop BAP address of the downlink traffic.

In some embodiments, after receiving the second transport migration modification request for the traffic, the first donor-CU configures the IAB-node with uplink BH information that updates the traffic.

In some embodiments, after receiving a second transport migration modification request for the traffic, the first donor-CU configures the IAB-node to update at least one of the following: BAP header rewriting information between topologies in an uplink direction, routing information in a topology of the second donor-CU, or BH RLC channel mapping information between topologies in the uplink direction.

In some embodiments, after receiving a second transport migration modification request for the traffic, the first donor-CU configures the IAB-node to update at least one of the following: BAP header rewriting information between topologies in a downlink direction, or BH RLC channel mapping information between topologies in the downlink direction.

In some embodiments, the first donor-CU receives a second transport migration modification request used for modifying an IP address for the IAB-node, transmitted by the second donor-CU.

For example, in a case where a routing ID and/or a donor distributed unit (donor-DU) of the traffic in a topology of the second donor-CU is changed, the first donor-CU receives a second transport migration modification request used for modifying an IP address for the IAB-node, transmitted by the second donor-CU.

In some embodiments, the second transport migration modification request is included in a second transport migration management request message.

In some embodiments, the second transport migration modification request includes the following information: an IAB-node identifier or IP address request index, a BAP address of a donor-DU in the topology of the first donor-CU or a BAP address of a donor-DU in the topology of the second donor-CU, and an IP address anchored at the donor-DU in the topology of the second donor-CU.

In some embodiments, the first donor-CU configures the IAB-node with an IP address anchored at a donor-DU in the topology of the second donor-CU.

Each of the above embodiments is only illustrative for the embodiments of the present disclosure, but the present disclosure is not limited to this, appropriate modifications can be also made based on the above each embodiment. For example, each of the above embodiments may be used individually, or one or more of the above embodiments may be combined.

As can be known from the above embodiments, the second donor-CU transmits to the first donor-CU a second transport migration modification request for a traffic; and the second donor-CU modifies a resource serving for the traffic in the topology of the second donor-CU. Thereby, when the second donor-CU modifies a resource serving for the traffic or modifies an IP address of an IAB-node, the first donor-CU can modify L2-related information or IP address of the traffic, so as to guarantee normal transmission of a migration traffic in the topology of the second donor-CU.

### Embodiments of a fifth aspect

The embodiments of the present disclosure provide an IAB-donor device, the contents same as the embodiments of the first aspect are not repeated. The device e.g. may be an IAB donor-CU in an IAB system (the first donor-CU in the embodiments of the first and second aspects), or may be a component or component(s) or assemblies or modules configured in the IAB donor-CU.

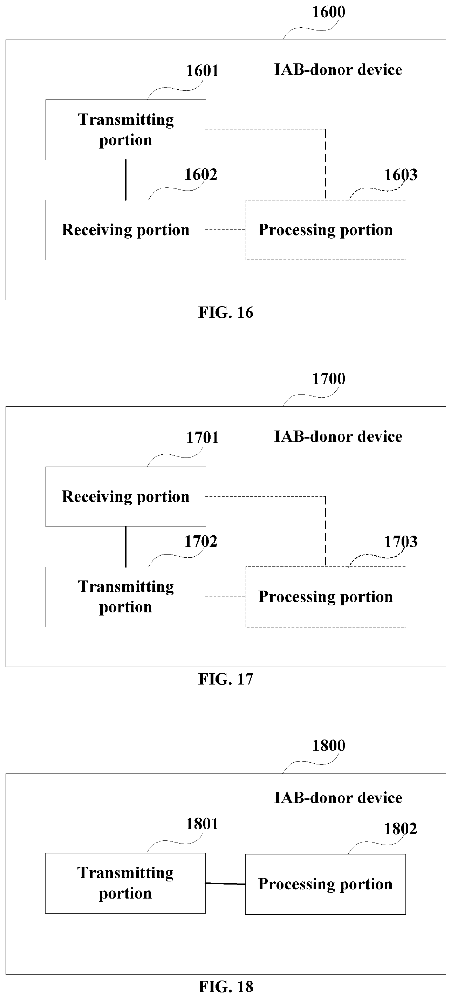

FIG. 16 is a schematic diagram of an IAB-donor device in the embodiments of the present disclosure. An IAB-DU of an IAB-node maintains F1 connection with a first donor centralized unit (donor-CU), and a resource serving for a traffic of the IAB-node has been established in a topology of a second donor-CU.

As shown in FIG. 16, the IAB-donor device 1600 includes:
a transmitting portion 1601 configured to transmit a first transport migration modification request for the traffic to the second donor-CU; and
a receiving portion 1602 configured to receive a transport migration modification response for the traffic transmitted by the second donor-CU.

In some embodiments, the IAB-MT of the IAB-node maintains an RRC connection with the second donor-CU, or the IAB-MT of the IAB-node maintains an RRC connection with the first donor-CU.

In some embodiments, the traffic includes at least one or a combination of the following: an F1 control plane traffic, an F1 user plane traffic, or a non-F1 traffic.

In some embodiments, the transmitting portion 1601 transmits to the second donor-CU a first transport migration modification request used for requesting to modify the resource serving for the traffic in the topology of the second donor-CU.

For example, in a case where a service parameter of the traffic is changed, the transmitting portion 1601 transmits to the second donor-CU a first transport migration modification request used for requesting to modify the resource serving for the traffic in the topology of the second donor-CU.

In some embodiments, a first transport migration modification request is transmitted via a first transport migration management request message.

In some embodiments, the receiving portion 1602 receives a transport migration modification response used for modifying a resource serving for the traffic in the topology of the second donor-CU, transmitted by the second donor-CU.

In some embodiments, the transport migration modification response is received via a transport migration management response message.

In some embodiments, the first transport migration modification request includes the following information: a traffic identifier of the traffic, quality of service and/or a traffic type of the traffic.

In some embodiments, the transport migration modification response includes the following information: the traffic identifier of the traffic, and BH information of the traffic in the topology of the second donor-CU.

In some embodiments, the BH information in the topology of the second donor-CU includes at least one of the following:
an ingress routing identifier (routing ID) of a downlink traffic;
an ingress BH RLC channel of the downlink traffic; or
a prior-hop BAP address of the downlink traffic; or
QoS mapping information of the downlink traffic.

In some embodiments, the BH information in the topology of the second donor-CU includes at least one of the following:
an egress routing identifier (routing ID) of an uplink traffic;
an egress BH RLC channel of the uplink traffic; or
a next-hop BAP address of the uplink traffic.

In some embodiments, as shown in FIG. 16, the IAB-donor device 1600 may further include:
a processing portion 1603 configured to perform at least one of the following operations:
updating QoS mapping information of the traffic;
configuring the IAB-node with uplink BH information for updating the traffic;
configuring the IAB-node to update at least one of the following: header rewriting information of a BAP between topologies in an uplink direction, routing information in the topology of the second donor-CU, or BH RLC channel mapping information between the topologies in the uplink direction; or
configuring the IAB-node to update at least one of the following: header rewriting information of a BAP between topologies in a downlink direction, or BH RLC channel mapping information between the topologies in the downlink direction.

In some embodiments, the transmitting portion 1601 further transmits to the second donor-CU a first transport migration modification request used for requesting to modify an IP address for the IAB-node.

For example, in a case where a routing ID and/or a donor distributed unit (donor-DU) of the traffic in a topology of the first donor-CU is changed, the transmitting portion 1601 further transmits to the second donor-CU a first transport migration modification request used for requesting to modify an IP address for the IAB-node.

In some embodiments, the first transport migration modification request is included in a first transport migration management request message.

In some embodiments, the first transport migration modification request includes at least one of the following information: an IAB-node identifier or an IP address request index, a BAP address of a donor-DU in a topology of the first donor-CU, or an IP address anchored at the donor-DU.

In some embodiments, the receiving portion 1602 further receives a transport migration modification response used for modifying an IP address for the IAB-node, transmitted by the second donor-CU.

In some embodiments, the transport migration modification response is included in a transport migration management response message.

In some embodiments, the transport migration modification response includes the following information: an IAB-node identifier or IP address request index, a BAP address of a donor-DU in the topology of the first donor-CU, and an IP address anchored at the donor-DU in the topology of the second donor-CU.

In some embodiments, the processing portion 1603 configures the IAB-node with an IP address anchored at a donor-DU in the topology of the second donor-CU.

In some embodiments, the receiving portion 1602 further receives a transport migration modification response used for rejecting a first transport migration modification request for the traffic, transmitted by the second donor-CU.

In some embodiments, the transport migration modification response is received via the transport migration management response message, and the transport migration management response message includes the traffic identifier of the traffic.

In some embodiments, in a case where an IAB-MT of an IAB-node is handed over from the first donor-CU to the second donor-CU, and one or more resources serving for one or more traffics of the IAB-node has been established in the topology of the second donor-CU, the transmitting portion 1601 transmits a first transport migration modification request for the one or more traffics.

In some embodiments, in a case where an IAB-MT of an IAB-node is reestablished from the first donor-CU to the second donor-CU, and one or more resources serving for one or more traffics of the IAB-node has been established in the topology of the second donor-CU, the transmitting portion 1601 transmits a first transport migration modification request for the one or more traffics.

In some embodiments, in a case where an IAB-MT of an IAB-node establishes dual-connection with the first donor-CU and the second donor-CU, and one or more resources serving for one or more traffics of the IAB-node has been established in the topology of the second donor-CU, the transmitting portion 1601 transmits a first transport migration modification request for the one or more traffics.

Each of the above embodiments is only illustrative for the embodiments of the present disclosure, but the present disclosure is not limited to this, appropriate modifications can be also made based on the above each embodiment. For example, each of the above embodiments may be used individually, or one or more of the above embodiments may be combined.

It's worth noting that the above only describes components or modules related to the present disclosure, but the present disclosure is not limited to this. The IAB-donor device 1600 in the embodiments of the present disclosure may further include other components or modules. For detailed contents of these components or modules, relevant technologies can be referred to.

Moreover, for the sake of simplicity, FIG. 16 only exemplarily shows a connection relationship or signal direction between components or modules, however persons skilled in the art should know that various relevant technologies such as bus connection can be used. The above components or modules can be realized by a hardware facility such as a processor, a memory, a transmitter, a receiver, etc. The embodiments of the present disclosure have no limitation to this.

As can be known from the above embodiments, a first donor-CU transmits a first transport migration modification request for a traffic to a second donor-CU; and the first donor-CU receives a transport migration modification response for the traffic transmitted by the second donor-CU. Thereby, the second donor-CU can modify a transmission resource serving for a migration traffic according to a change of a service parameter of the traffic, so that service requirements of the traffic can still be met after the service parameter of the traffic is changed.

### Embodiments of a sixth aspect

The embodiments of the present disclosure provide an IAB-donor device, the contents same as the embodiments of the second aspect are not repeated. The device e.g. may be an IAB donor-CU in an IAB system (the second donor-CU in the embodiments of the first and second aspects), or may be a component or component(s) or assemblies or modules configured in the IAB donor-CU.

FIG. 17 is a schematic diagram of an IAB-donor device in the embodiments of the present disclosure. An IAB-DU of an IAB-node maintains F1 connection with a first donor-CU, and a resource serving for a traffic of the IAB-node has been established in a topology of a second donor-CU.

As shown in FIG. 17, the IAB-donor device 1700 includes:
a receiving portion 1701 configured to receive a first transport migration modification request for the traffic transmitted by the first donor-CU; and
a transmitting portion 1702 configured to transmit a transport migration modification response for the traffic to the first donor-CU.

In some embodiments, the IAB-MT of the IAB-node maintains an RRC connection with the second donor-CU, or the IAB-MT of the IAB-node maintains an RRC connection with the first donor-CU.

In some embodiments, the traffic includes at least one or a combination of the following: an F1 control plane (F1-C) traffic, an F1 user plane (F 1-U) traffic, or a non-F1 traffic.

In some embodiments, the receiving portion 1701 receives a first transport migration modification request used for requesting to modify the resource serving for the traffic in the topology of the second donor-CU, transmitted by the first donor-CU.

For example, in a case where a service parameter of the traffic is changed, the receiving portion 1701 receives a first transport migration modification request used for requesting to modify the resource serving for the traffic in the topology of the second donor-CU, transmitted by the first donor-CU.

In some embodiments, a first transport migration modification request is received via a first transport migration management request message.

In some embodiments, the first transport migration modification request includes the following information: a traffic identifier of the traffic, quality of service (QoS) and/or a traffic type of the traffic.

In some embodiments, as shown in FIG. 17, the IAB-donor device 1700 may further include:
a processing portion 1703 configured to update a backhaul (BH) radio link control (RLC) channel and/or BAP sublayer routing of the traffic used on a path in the topology of the second donor-CU, or update QoS mapping information of the traffic.

In some embodiments, the processing portion 1703 updates uplink BH information of the traffic, wherein the uplink BH information includes a routing identifier, an uplink BH RLC channel and/or a BAP address of a next-hop node.

In some embodiments, the processing portion 1703 updates an uplink egress routing identifier, an egress BH RLC channel and/or a BAP address of a next-hop node of the traffic; or, updates a downlink ingress routing identifier, an ingress BH RLC channel and/or a BAP address of a prior-hop node of the traffic.

In some embodiments, the transmitting portion 1702 transmits to the first donor-CU a transport migration modification response used for modifying the resource serving for the traffic in the topology of the second donor-CU.

In some embodiments, the transport migration modification response is transmitted via a transport migration management response message.

In some embodiments, the transport migration modification response includes the following information: the traffic identifier of the traffic, and BH information of the traffic in the topology of the second donor-CU.

In some embodiments, the BH information in the topology of the second donor-CU includes at least one of the following:
an ingress routing identifier (routing ID) of a downlink traffic;
an ingress BH RLC channel of the downlink traffic; or
a prior-hop BAP address of the downlink traffic; or
QoS mapping information of the downlink traffic.

In some embodiments, the BH information in the topology of the second donor-CU includes at least one of the following:
an egress routing identifier (routing ID) of an uplink traffic;
an egress BH RLC channel of the uplink traffic; or
a next-hop BAP address of the uplink traffic.

In some embodiments, the receiving portion 1701 receives a first transport migration modification request used for requesting to modify an IP address for the IAB-node, transmitted by the first donor-CU.

For example, in a case where a routing ID and/or a donor distributed unit (donor-DU) of the traffic in a topology of the first donor-CU is changed, the receiving portion 1701 receives a first transport migration modification request used for requesting to modify an IP address for the IAB-node, transmitted by the first donor-CU.

In some embodiments, the first transport migration modification request is included in a first transport migration management request message.

In some embodiments, the first transport migration modification request includes at least one of the following information: an IAB-node identifier or an IP address request index, a BAP address of a donor-DU in a topology of the first donor-CU, or an IP address anchored at the donor-DU.

In some embodiments, the transmitting portion 1702 further transmits to the first donor-CU a transport migration modification response used for modifying an IP address for the IAB-node. The transport migration modification response is included in a transport migration management response message.

In some embodiments, the transport migration modification response includes the following information: an IAB-node identifier or IP address request index, a BAP address of a donor-DU in the topology of the first donor-CU, and an IP address anchored at the donor-DU in the topology of the second donor-CU.

In some embodiments, the processing portion 1703 rejects a first transport migration modification request for the traffic after receiving the first transport migration modification request.

For example, in a case where quality of service (QoS) of the traffic cannot be satisfied, the processing portion 1703 rejects a first transport migration modification request for the traffic after receiving the first transport migration modification request.

In some embodiments, the transmitting portion 1702 transmits to the first donor-CU a transport migration modification response used for rejecting a transport migration modification request for the traffic.

In some embodiments, the second donor-CU transmits the transport migration modification response via a transport migration management response message. The transport migration modification response includes the traffic identifier of the traffic.

Each of the above embodiments is only illustrative for the embodiments of the present disclosure, but the present disclosure is not limited to this, appropriate modifications can be also made based on the above each embodiment. For example, each of the above embodiments may be used individually, or one or more of the above embodiments may be combined.

It's worth noting that the above only describes components or modules related to the present disclosure, but the present disclosure is not limited to this. The IAB-donor device 1700 in the embodiments of the present disclosure may further include other components or modules. For detailed contents of these components or modules, relevant technologies can be referred to.

Moreover, for the sake of simplicity, FIG. 17 only exemplarily shows a connection relationship or signal direction between components or modules, however persons skilled in the art should know that various relevant technologies such as bus connection can be used. The above components or modules can be realized by a hardware facility such as a processor, a memory, a transmitter, a receiver, etc. The embodiments of the present disclosure have no limitation to this.

As can be known from the above embodiments, a first donor-CU transmits a first transport migration modification request for a traffic to a second donor-CU; and the first donor-CU receives a transport migration modification response for the traffic transmitted by the second donor-CU. Thereby, the second donor-CU can modify a transmission resource serving for a migration traffic according to a change of a service parameter of the traffic, so that service requirements of the traffic can still be met after the service parameter of the traffic is changed.

### Embodiments of a seventh aspect

The embodiments of the present disclosure provide an IAB-donor device, the contents same as the embodiments of the third aspect are not repeated. The device e.g. may be an IAB donor-CU in an IAB system (the second donor-CU in the embodiments of the third and fourth aspects), or may be a component or component(s) or assemblies or modules configured in the IAB donor-CU.

FIG. 18 is a schematic diagram of an IAB-donor device in the embodiments of the present disclosure. An IAB-DU of an IAB-node maintains F1 connection with a first donor centralized unit (donor-CU), and a resource serving for a traffic of the IAB-node has been established in a topology of a second donor-CU.

As shown in FIG. 18, the IAB-donor device 1800 includes:
a transmitting portion 1801 configured to transmit a second transport migration modification request for a traffic to the first donor-CU; and
a processing portion 1802 configured to modify a resource serving for the traffic in the topology of the second donor-CU.

In some embodiments, the transmitting portion 1801 transmits to the first donor-CU the second transport migration modification request used for modifying a routing ID and/or a BH RLC channel of the traffic in the topology of the second donor-CU.

In some embodiments, the second transport migration modification request is transmitted via a second TRANSPORT MIGRATION MANAGEMENT REQUEST message.

In some embodiments, the second transport migration modification request includes the following information:
a traffic identifier of the traffic;
BH information of the traffic in the topology of the second donor-CU.

In some embodiments, the BH information in the topology of the second donor-CU includes at least one of the following:
an egress routing identifier (routing ID) of an uplink traffic;
an egress BH RLC channel of the uplink traffic; or
a next-hop BAP address of the uplink traffic.

In some embodiments, the BH information in the topology of the second donor-CU includes at least one of the following:
an ingress routing identifier (routing ID) of a downlink traffic;
an ingress BH RLC channel of the downlink traffic; or
a prior-hop BAP address of the downlink traffic.

In some embodiments, the processing portion 1802 updates a BH RLC channel and/or BAP sublayer routing of the traffic used on a path in the topology of the second donor-CU.

In some embodiments, the processing portion 1802 updates uplink BH information of the traffic, wherein the uplink BH information includes a routing identifier, an uplink BH RLC channel and/or a BAP address of a next-hop node;

In some embodiments, the processing portion 1802 updates an uplink egress routing identifier, an egress BH RLC channel and/or a BAP address of a next-hop node of the traffic; or, updates a downlink ingress routing identifier, an ingress BH RLC channel and/or a BAP address of a prior-hop node of the traffic.

In some embodiments, the transmitting portion 1801 further transmits to the first donor-CU a second transport migration modification request used for modifying an IP address for the IAB-node.

For example, in a case where a routing ID and/or a donor distributed unit (donor-DU) of the traffic in a topology of the second donor-CU is changed, the transmitting portion 1801 further transmits to the first donor-CU a second transport migration modification request used for modifying an IP address for the IAB-node.

In some embodiments, the second transport migration modification request is included in a second transport migration management request message.

In some embodiments, the second transport migration modification request includes the following information: an IAB-node identifier or IP address request index, a BAP address of a donor-DU in the topology of the first donor-CU or a BAP address of a donor-DU in the topology of the second donor-CU, and an IP address anchored at the donor-DU in the topology of the second donor-CU.

In some embodiments, in a case where an IAB-MT of an IAB-node is handed over from the first donor-CU to the second donor-CU, and one or more resources serving for one or more traffics of the IAB-node has been established in the topology of the second donor-CU, the transmitting portion 1801 transmits a second transport migration modification request for the one or more traffics.

In some embodiments, in a case where an IAB-MT of an IAB-node is reestablished from the first donor-CU to the second donor-CU, and one or more resources serving for one or more traffics of the IAB-node has been established in the topology of the second donor-CU, the transmitting portion 1801 transmits a second transport migration modification request for the one or more traffics.

In some embodiments, in a case where an IAB-MT of an IAB-node establishes dual-connection with the first donor-CU and the second donor-CU, and one or more resources serving for one or more traffics of the IAB-node has been established in the topology of the second donor-CU, the transmitting portion 1801 transmits a second transport migration modification request for the one or more traffics.

Each of the above embodiments is only illustrative for the embodiments of the present disclosure, but the present disclosure is not limited to this, appropriate modifications can be also made based on the above each embodiment. For example, each of the above embodiments may be used individually, or one or more of the above embodiments may be combined.

It's worth noting that the above only describes components or modules related to the present disclosure, but the present disclosure is not limited to this. The IAB-donor device 1800 in the embodiments of the present disclosure may further include other components or modules. For detailed contents of these components or modules, relevant technologies can be referred to.

Moreover, for the sake of simplicity, FIG. 18 only exemplarily shows a connection relationship or signal direction between components or modules, however persons skilled in the art should know that various relevant technologies such as bus connection can be used. The above components or modules can be realized by a hardware facility such as a processor, a memory, a transmitter, a receiver, etc. The embodiments of the present disclosure have no limitation to this.

As can be known from the above embodiments, the second donor-CU transmits to the first donor-CU a second transport migration modification request for a traffic; and the second donor-CU modifies a resource serving for the traffic in the topology of the second donor-CU. Thereby, when the second donor-CU modifies a resource serving for the traffic or modifies an IP address of an IAB-node, the first donor-CU can modify L2-related information or IP address of the traffic, so as to guarantee normal transmission of a migration traffic in the topology of the second donor-CU.

### Embodiments of an eighth aspect

The embodiments of the present disclosure provide an IAB-donor device, the contents same as the embodiments of the fourth aspect are not repeated. The device e.g. may be an IAB donor-CU in an IAB system (the first donor-CU in the embodiments of the third and fourth aspects), or may be a component or component(s) or assemblies or modules configured in the IAB donor-CU.

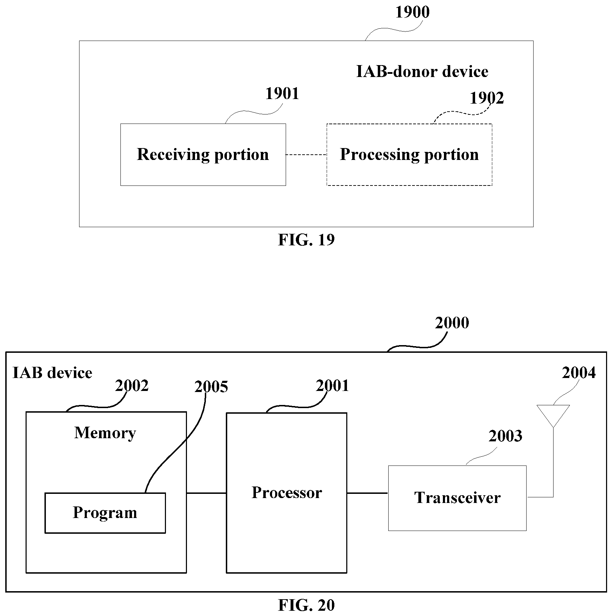

FIG. 19 is a schematic diagram of an IAB-donor device in the embodiments of the present disclosure. An IAB-DU of an IAB-node maintains F1 connection with a first donor-CU, and a resource serving for a traffic of the IAB-node has been established in a topology of a second donor-CU.

As shown in FIG. 19, the IAB-donor device 1900 includes:
a receiving portion 1901 configured to receive a second transport migration modification request for a traffic transmitted by the second donor-CU; wherein the second donor-CU modifies a resource serving for the traffic in the topology of the second donor-CU.

In some embodiments, the receiving portion 1901 receives the second transport migration modification request used for modifying a routing ID and/or a BH RLC channel of the traffic in the topology of the second donor-CU, transmitted by the second donor-CU.

In some embodiments, the second transport migration modification request is received via a second TRANSPORT MIGRATION MANAGEMENT REQUEST message.

In some embodiments, the second transport migration modification request includes the following information:
a traffic identifier of the traffic;
BH information of the traffic in the topology of the second donor-CU.

In some embodiments, the BH information in the topology of the second donor-CU includes at least one of the following:
an egress routing identifier (routing ID) of an uplink traffic;
an egress BH RLC channel of the uplink traffic; or
a next-hop BAP address of the uplink traffic.

In some embodiments, the BH information in the topology of the second donor-CU includes at least one of the following:
an ingress routing identifier (routing ID) of a downlink traffic;
an ingress BH RLC channel of the downlink traffic; or
a prior-hop BAP address of the downlink traffic.

In some embodiments, as shown in FIG. 19, the IAB-donor device 1900 may further include:
a processing portion 1902 configuring the IAB-node with uplink BH information for updating the traffic;
In some embodiments, the processing portion 1902 configures the IAB-node to update at least one of the following: header rewriting information of a BAP between topologies in an uplink direction, routing information in the topology of the second donor-CU, or BH RLC channel mapping information between the topologies in the uplink direction.

In some embodiments, the processing portion 1902 configures the IAB-node to update at least one of the following: header rewriting information of a BAP between topologies in a downlink direction, or BH RLC channel mapping information between the topologies in the downlink direction.

In some embodiments, the receiving portion 1901 further receives a second transport migration modification request used for modifying an IP address for the IAB-node, transmitted by the second donor-CU.

For example, in a case where a routing ID and/or a donor distributed unit (donor-DU) of the traffic in a topology of the second donor-CU is changed, the receiving portion 1901 further receives a second transport migration modification request used for modifying an IP address for the IAB-node, transmitted by the second donor-CU.

In some embodiments, the second transport migration modification request is included in a second transport migration management request message.

In some embodiments, the second transport migration modification request includes the following information: an IAB-node identifier or IP address request index, a BAP address of a donor-DU in the topology of the first donor-CU or a BAP address of a donor-DU in the topology of the first donor-CU, and an IP address anchored at the donor-DU in the topology of the second donor-CU.

In some embodiments, the processing portion 1902 further configures the IAB-node with an IP address anchored at a donor-DU in the topology of the second donor-CU.

Each of the above embodiments is only illustrative for the embodiments of the present disclosure, but the present disclosure is not limited to this, appropriate modifications can be also made based on the above each embodiment. For example, each of the above embodiments may be used individually, or one or more of the above embodiments may be combined.

It's worth noting that the above only describes components or modules related to the present disclosure, but the present disclosure is not limited to this. The IAB-donor device 1900 in the embodiments of the present disclosure may further include other components or modules. For detailed contents of these components or modules, relevant technologies can be referred to.

Moreover, for the sake of simplicity, FIG. 19 only exemplarily shows a connection relationship or signal direction between components or modules, however persons skilled in the art should know that various relevant technologies such as bus connection can be used. The above components or modules can be realized by a hardware facility such as a processor, a memory, a transmitter, a receiver, etc. The embodiments of the present disclosure have no limitation to this.

As can be known from the above embodiments, the second donor-CU transmits to the first donor-CU a second transport migration modification request for a traffic; and the second donor-CU modifies a resource serving for the traffic in the topology of the second donor-CU. Thereby, when the second donor-CU modifies a resource serving for the traffic or modifies an IP address of an IAB-node, the first donor-CU can modify L2-related information or IP address of the traffic, so as to guarantee normal transmission of a migration traffic in the topology of the second donor-CU.

### Embodiments of a ninth aspect

The embodiments of the present disclosure provide a communication system, including a donor device and an IAB-node; for a network architecture of the donor device and the IAB-node, relevant technologies may be further referred to, description will be omitted here.

In some embodiments, an IAB system includes:
a first donor centralized unit (a first donor-CU) configured to transmit a first transport migration modification request for a traffic; and receive a transport migration modification response for the traffic;
a second donor centralized unit (a second donor-CU) configured to receive the first transport migration modification request and transmits the transport migration modification response.

In some embodiments, an IAB system includes:
a second donor centralized unit (a second donor-CU) configured to transmit a second transport migration modification request for a traffic, and modify a resource serving for the traffic in a topology of the second donor centralized unit;
a first donor centralized unit (a first donor-CU) configured to receive the second transport migration modification request.

The embodiments of the present disclosure further provide an IAB device, which may be an IAB-donor device, or may be an IAB-node device (migrating node or child node).

FIG. 20 is a schematic diagram of an IAB device in the embodiments of the present disclosure. As shown in FIG. 20, the IAB device 2000 may include: a processor (such as a central processing unit (CPU)) 2001 and a memory 2002; the memory 2002 is coupled to the processor 2001. The memory 2002 may store various data; moreover, also stores a program 2005 for information processing, and executes the program 2005 under the control of the central processor 2001.

For example, the processor 2001 may be configured to execute a program to implement the transport migration management method in the embodiments of the first aspect. For example, the processor 2001 may be configured to perform the following control: transmitting a first transport migration modification request for the traffic to a second donor-CU; and receiving a transport migration modification response for the traffic transmitted by the second donor-CU.

For another example, the processor 2001 may be configured to execute a program to implement the transport migration management method in the embodiments of the second aspect. For example, the processor 2001 may be configured to perform the following control: receiving a first transport migration modification request for the traffic, transmitted by a first donor-CU; and transmitting a transport migration modification response for the traffic to the first donor-CU.

For another example, the processor 2001 may be configured to execute a program to implement the transport migration management method in the embodiments of the third aspect. For example, the processor 2001 may be configured to perform the following control: transmitting a second transport migration modification request for a traffic to a first donor-CU; and modifying a resource serving for the traffic in the topology of the second donor-CU.

For another example, the processor 2001 may be configured to execute a program to implement the transport migration management method in the embodiments of the fourth aspect. For example, the processor 2001 may be configured to perform the following control: receiving a second transport migration modification request for a traffic transmitted by the second donor-CU; wherein the second donor-CU modifies a resource serving for the traffic in the topology of the second donor-CU.

In addition, as shown in FIG. 20, the IAB device 2000 may further include: a transceiver 2003 and an antenna 2004, etc.; wherein the functions of said components are similar to relevant arts, which are not repeated here. It's worth noting that the IAB device 2000 does not have to include all the components shown in FIG. 20. Moreover, the IAB device 2000 may also include components not shown in FIG. 20, prior arts may be referred to.

The embodiments of the present disclosure further provide a computer readable program, wherein when an IAB device executes the program, the program enables a computer to execute the transport migration management method in the embodiments of the first to fourth aspects, in the IAB device.

The embodiments of the present disclosure further provide a storage medium in which a computer readable program is stored, wherein the computer readable program enables a computer to execute the transport migration management method in the embodiments of the first to fourth aspects, in the IAB device.

The device and method in the present disclosure can be realized by hardware, or can be realized by combining hardware with software. The present disclosure relates to such a computer readable program, when the program is executed by a logic component, the computer readable program enables the logic component to realize the apparatus described in the above text or a constituent component, or enables the logic component to realize various methods or steps described in the above text. The logic component is e.g. a field programmable logic component, a microprocessor, a processor used in a computer, etc. The present disclosure also relates to a storage medium storing the program, such as a hard disk, a magnetic disk, an optical disk, a DVD, a flash memory and the like.

By combining with the method/apparatus described in the embodiments of the present disclosure, it can be directly reflected as hardware, a software executed by a processor, or a combination of the two. For example, one or more in the functional block diagram or one or more combinations in the functional block diagram as shown in the drawings may correspond to software modules of a computer program flow, and may also correspond to hardware modules. These software modules may respectively correspond to the steps as shown in the drawings. These hardware modules can be realized by solidifying these software modules e.g. using a field-programmable gate array (FPGA).

A software module can be located in a RAM memory, a flash memory, a ROM memory, an EPROM memory, an EEPROM memory, a register, a hard disk, a mobile magnetic disk, a CD-ROM or a storage medium in any other form as known in this field. A storage medium may be coupled to a processor, thereby enabling the processor to read information from the storage medium, and to write the information into the storage medium; or the storage medium may be a constituent part of the processor. The processor and the storage medium may be located in an ASIC. The software module can be stored in a memory of a mobile terminal, and may also be stored in a memory card of the mobile terminal. For example, if a device (such as the mobile terminal) adopts a MEGA-SIM card with a larger capacity or a flash memory apparatus with a large capacity, the software module can be stored in the MEGA-SIM card or the flash memory apparatus with a large capacity.

One or more in the functional block diagram or one or more combinations in the functional block diagram as described in the drawings can be implemented as a general-purpose processor for performing the functions described in the present disclosure, a digital signal processor (DSP), an application-specific integrated circuit (ASIC), a field-programmable gate array (FPGA) or other programmable logic device, discrete gate or transistor logic device, discrete hardware components or any combination thereof. One or more in the functional block diagram or one or more combinations in the functional block diagram as described in the drawings can be also implemented as a combination of computer equipments, such as a combination of a DSP and a microprocessor, a plurality of microprocessors, one or more microprocessors combined and communicating with the DSP or any other such configuration.

The present disclosure is described by combining with the specific implementations, however persons skilled in the art should clearly know that these descriptions are exemplary and do not limit the protection scope of the present disclosure. Persons skilled in the art can make various variations and modifications to the present disclosure based on the principle of the present disclosure, these variations and modifications are also within the scope of the present disclosure.

Regarding the above implementations disclosed in this embodiment, the following supplements are further disclosed:
1. A transport migration management method, wherein an IAB-DU of an IAB-node maintains F1 connection with a first donor centralized unit (donor-CU), and a resource serving for a traffic of the IAB-node has been established in a topology of a second donor-CU, and the method includes:
   the first donor-CU transmits a first transport migration modification request for the traffic to the second donor-CU; and
   the first donor-CU receives a transport migration modification response for the traffic transmitted by the second donor-CU.
2. The method according to Supplement 1, wherein the IAB-MT of the IAB-node maintains an RRC connection with the second donor-CU, or the IAB-MT of the IAB-node maintains an RRC connection with the first donor-CU.
3. The method according to Supplement 1 or 2, wherein the traffic includes at least one or a combination of the following: an F1 control plane (F1-C) traffic, an F1 user plane (F1-U) traffic, or a non-F1 traffic.
4. The method according to any one of Supplements 1 to 3, wherein the first donor-CU transmits to the second donor-CU a first transport migration modification request used for requesting to modify the resource serving for the traffic in the topology of the second donor-CU.
5. The method according to Supplement 4, wherein the first donor-CU transmits the first transport migration modification request via a first TRANSPORT MIGRATION MANAGEMENT REQUEST message.
6. The method according to Supplement 4 or 5, wherein the first transport migration modification request includes the following information: a traffic identifier of the traffic, quality of service (QoS) and/or a traffic type of the traffic.
7. The method according to any one of Supplements 4 to 6, wherein the first donor-CU receives a transport migration modification response used for modifying a resource serving for the traffic in the topology of the second donor-CU, transmitted by the second donor-CU.
8. The method according to Supplement 7, wherein the first donor-CU receives the transport migration modification response via a TRANSPORT MIGRATION MANAGEMENT RESPONSE message.
9. The method according to Supplement 7 or 8, wherein the transport migration modification response includes the following information: the traffic identifier of the traffic, and BH information of the traffic in the topology of the second donor-CU.
10. The method according to Supplement 9, wherein the BH information in the topology of the second donor-CU includes at least one of the following:
   an ingress routing identifier (routing ID) of a downlink traffic;
   an ingress BH RLC channel of the downlink traffic; or
   a prior-hop BAP address of the downlink traffic; or
   QoS mapping information of the downlink traffic.
11. The method according to Supplement 9, wherein the BH information in the topology of the second donor-CU includes at least one of the following:
   an egress routing identifier (routing ID) of an uplink traffic;
   an egress BH RLC channel of the uplink traffic; or
   a next-hop BAP address of the uplink traffic.
12. The method according to any one of Supplements 1 to 11, wherein after the first donor-CU receives the transport migration modification response for the traffic, the method further includes:
   the first donor-CU updates QoS mapping information of the traffic.
13. The method according to any one of Supplements 1 to 12, wherein after the first donor-CU receives the transport migration modification response for the traffic, the method further includes:
   the first donor-CU configures the IAB-node with uplink BH information that updates the traffic.
14. The method according to any one of Supplements 1 to 13, wherein after the first donor-CU receives the transport migration modification response for the traffic, the method further includes:
   the first donor-CU configures the IAB-node to update at least one of the following: header rewriting information of a BAP between topologies in an uplink direction, routing information in the topology of the second donor-CU, or BH RLC channel mapping information between the topologies in the uplink direction.
15. The method according to any one of Supplements 1 to 13, wherein after the first donor-CU receives the transport migration modification response for the traffic, the method further includes:
   the first donor-CU configures the IAB-node to update at least one of the following: header rewriting information of a BAP between topologies in a downlink direction, or BH RLC channel mapping information between the topologies in the downlink direction.
16. The method according to any one of Supplements 1 to 15, wherein the first donor-CU transmits to the second donor-CU the first transport migration modification request used for requesting to modify an IP address for the IAB-node.
17. The method according to Supplement 16, wherein the first transport migration modification request is included in a first transport migration management request message.
18. The method according to Supplement 16, wherein the first transport migration modification request includes the following information: an IAB-node identifier or an IP address request index, a BAP address of a donor-DU in a topology of the first donor-CU.
19. The method according to Supplement 18, wherein the first transport migration modification request further includes: an IP address anchored at the donor-DU.
20. The method according to any one of Supplements 16 to 19, wherein the first donor-CU receives a transport migration modification response used for modifying an IP address for the IAB-node, transmitted by the second donor-CU.
21. The method according to Supplement 20, wherein the transport migration modification response is included in a transport migration management response message.
22. The method according to Supplement 20, wherein the transport migration modification response includes the following information: an IAB-node identifier or IP address request index, a BAP address of a donor-DU in the topology of the first donor-CU, and an IP address anchored at the donor-DU in the topology of the second donor-CU.
23. The method according to any one of Supplements 20 to 22, wherein after the first donor-CU receives the transport migration modification response for the IAB-node, the method further includes:
   the first donor-CU configures the IAB-node with an IP address anchored to a donor-DU in the topology of the second donor-CU.
24. The method according to any one of Supplements 4 to 6, wherein the first donor-CU receives a transport migration modification response used for rejecting a first transport migration modification request for the traffic, transmitted by the second donor-CU.
25. The method according to Supplement 24, wherein the first donor-CU receives the transport migration modification response via a transport migration management response message.
26. The method according to Supplement 25, wherein the transport migration management response message includes the traffic identifier of the traffic.
27. The method according to any one of Supplements 1 to 26, wherein in a case where an IAB-MT of an IAB-node is handed over from the first donor-CU to the second donor-CU, and one or more resources serving for one or more traffics of the IAB-node has been established in the topology of the second donor-CU, the first donor-CU transmits a first transport migration modification request for the one or more traffics.
28. The method according to any one of Supplements 1 to 26, wherein in a case where an IAB-MT of an IAB-node is reestablished from the first donor-CU to the second donor-CU, and one or more resources serving for one or more traffics of the IAB-node has been established in the topology of the second donor-CU, the first donor-CU transmits a first transport migration modification request for the one or more traffics.
29. The method according to any one of Supplements 1 to 26, wherein in a case where an IAB-MT of an IAB-node establishes dual-connection with the first donor-CU and the second donor-CU, and one or more resources serving for one or more traffics of the IAB-node has been established in the topology of the second donor-CU, the first donor-CU transmits a first transport migration modification request for the one or more traffics.
30. A transport migration management method, wherein an IAB-DU of an IAB-node maintains F1 connection with a first donor centralized unit (donor-CU), and a resource serving for a traffic of the IAB-node has been established in a topology of a second donor-CU, and the method includes:
   the second donor-CU receives a first transport migration modification request for the traffic transmitted by the first donor-CU; and
   the second donor-CU transmits a transport migration modification response for the traffic to the first donor-CU.
31. The method according to Supplement 30, wherein the IAB-MT of the IAB-node maintains an RRC connection with the second donor-CU, or the IAB-MT of the IAB-node maintains an RRC connection with the first donor-CU.
32. The method according to Supplement 30 or 31, wherein the traffic includes at least one or a combination of the following: an F1 control plane (F 1-C) traffic, an F1 user plane (F1-U) traffic, or a non-F1 traffic.
33. The method according to any one of Supplements 30 to 32, wherein the second donor-CU receives a first transport migration modification request used for requesting to modify the resource serving for the traffic in the topology of the second donor-CU, transmitted by the first donor-CU.
34. The method according to Supplement 33, wherein the second donor-CU receives the first transport migration modification request via a first TRANSPORT MIGRATION MANAGEMENT REQUEST message.
35. The method according to Supplement 33 or 34, wherein the first transport migration modification request includes the following information: a traffic identifier of the traffic, quality of service (QoS) and/or a traffic type of the traffic.
36. The method according to any one of Supplements 30 to 35, wherein after receiving the first transport migration modification request, the second donor-CU updates a backhaul (BH) radio link control (RLC) channel and/or BAP sublayer routing of the traffic used on a path in the topology of the second donor-CU, or updates QoS mapping information of the traffic.
37. The method according to any one of Supplements 30 to 36, wherein after receiving the first transport migration modification request, the second donor-CU updates uplink BH information of the traffic, wherein the uplink BH information includes a routing identifier, an uplink BH RLC channel and/or a BAP address of a next-hop node;
38. The method according to any one of Supplements 30 to 36, wherein after receiving the first transport migration modification request, the second donor-CU updates an uplink egress routing identifier, an egress BH RLC channel and/or a BAP address of a next-hop node of the traffic;
   or, updates a downlink ingress routing identifier, an ingress BH RLC channel and/or a BAP address of a prior-hop node of the traffic.
39. The method according to any one of Supplements 33 to 38, wherein the second donor-CU transmits to the first donor-CU a transport migration modification response used for modifying the resource serving for the traffic in the topology of the second donor-CU.
40. The method according to Supplement 39, wherein the second donor-CU transmits the transport migration modification response via a TRANSPORT MIGRATION MANAGEMENT RESPONSE message.
41. The method according to Supplement 39 or 40, wherein the transport migration modification response includes the following information: the traffic identifier of the traffic, and BH information of the traffic in the topology of the second donor-CU.
42. The method according to Supplement 41, wherein the BH information in the topology of the second donor-CU includes at least one of the following:
   an ingress routing identifier (routing ID) of a downlink traffic;
   an ingress BH RLC channel of the downlink traffic; or
   a prior-hop BAP address of the downlink traffic; or
   QoS mapping information of the downlink traffic.
43. The method according to Supplement 41, wherein the BH information in the topology of the second donor-CU includes at least one of the following:
   an egress routing identifier (routing ID) of an uplink traffic;
   an egress BH RLC channel of the uplink traffic; or
   a next-hop BAP address of the uplink traffic.
44. The method according to any one of Supplements 30 to 43, wherein the second donor-CU receives a first transport migration modification request used for requesting to modify an IP address for the IAB-node, transmitted by the first donor-CU.
45. The method according to Supplement 44, wherein the first transport migration modification request is included in a first transport migration management request message.
46. The method according to Supplement 44, wherein the first transport migration modification request includes the following information: an IAB-node identifier or an IP address request index, a BAP address of a donor-DU in a topology of the first donor-CU.
47. The method according to Supplement 46, wherein the first transport migration modification request further includes: an IP address anchored at the donor-DU.
48. The method according to any one of Supplements 44 to 47, wherein the second donor-CU transmits to the first donor-CU a transport migration modification response used for modifying an IP address for the IAB-node.
49. The method according to Supplement 48, wherein the transport migration modification response is included in a transport migration management response message.
50. The method according to Supplement 48, wherein the transport migration modification response includes the following information: an IAB-node identifier or IP address request index, a BAP address of a donor-DU in the topology of the first donor-CU, and an IP address anchored at the donor-DU in the topology of the second donor-CU.
51. The method according to any one of Supplements 33 to 35, wherein the second donor-CU rejects a first transport migration modification request for the traffic after receiving the first transport migration modification request.
52. The method according to Supplement 51, wherein the second donor-CU transmits to the first donor-CU a transport migration modification response used for rejecting a transport migration modification request for the traffic.
53. The method according to Supplement 52, wherein the second donor-CU transmits the transport migration modification response via a transport migration management response message.
54. The method according to Supplement 52, wherein the transport migration modification response includes the traffic identifier of the traffic.
55. A transport migration management method, wherein an IAB-DU of an IAB-node maintains F1 connection with a first donor-CU, and a resource serving for a traffic of the IAB-node has been established in a topology of a second donor-CU, and the method includes:
   the second donor-CU transmits a second transport migration modification request for a traffic to the first donor-CU; and
   the second donor-CU modifies a resource serving for the traffic in the topology of the second donor-CU.
56. The method according to Supplement 55, wherein the second donor-CU transmits to the first donor-CU the second transport migration modification request used for modifying a routing ID and/or a BH RLC channel of the traffic in the topology of the second donor-CU.
57. The method according to Supplement 56, wherein the second donor-CU transmits the second transport migration modification request via a second TRANSPORT MIGRATION MANAGEMENT REQUEST message.
58. The method according to Supplement 56 or 57, wherein the second transport migration modification request includes the following information:
   a traffic identifier of the traffic;
   BH information of the traffic in the topology of the second donor-CU.
59. The method according to Supplement 58, wherein the BH information in the topology of the second donor-CU includes at least one of the following:
   an egress routing identifier (routing ID) of an uplink traffic;
   an egress BH RLC channel of the uplink traffic; or
   a next-hop BAP address of the uplink traffic.
60. The method according to Supplement 58, wherein the BH information in the topology of the second donor-CU includes at least one of the following:
   an ingress routing identifier (routing ID) of a downlink traffic;
   an ingress BH RLC channel of the downlink traffic; or
   a prior-hop BAP address of the downlink traffic.
61. The method according to any one of Supplements 55 to 60, wherein the second donor-CU modifies a resource serving for the traffic in the topology of the second donor-CU, which includes:
   the second donor-CU updates a BH RLC channel and/or BAP sublayer routing of the traffic used on a path in the topology of the second donor-CU.
62. The method according to any one of Supplements 55 to 61, wherein the second donor-CU modifies a resource serving for the traffic in the topology of the second donor-CU, which includes:
   the second donor-CU updates uplink BH information of the traffic, wherein the uplink BH information includes a routing identifier, an uplink BH RLC channel and/or a BAP address of a next-hop node.
63. The method according to any one of Supplements 55 to 62, wherein the second donor-CU modifies a resource serving for the traffic in the topology of the second donor-CU, which includes:
   the second donor-CU updates an uplink egress routing identifier, an egress BH RLC channel and/or a BAP address of a next-hop node of the traffic;
   or, updates a downlink ingress routing identifier, an ingress BH RLC channel and/or a BAP address of a prior-hop node of the traffic.
64. The method according to any one of Supplements 55 to 63, wherein the second donor-CU transmits to the first donor-CU a second transport migration modification request used for modifying an IP address for the IAB-node.
65. The method according to Supplement 64, wherein the second transport migration modification request is included in a second transport migration management request message.
66. The method according to Supplement 64, wherein the second transport migration modification request includes the following information: an IAB-node identifier or IP address request index, a BAP address of a donor-DU in the topology of the first donor-CU or a BAP address of a donor-DU in the topology of the second donor-CU, and an IP address anchored at the donor-DU in the topology of the second donor-CU.
67. The method according to any one of Supplements 55 to 66, wherein in a case where an IAB-MT of an IAB-node is handed over from the first donor-CU to the second donor-CU, and one or more resources serving for one or more traffics of the IAB-node has been established in the topology of the second donor-CU, the second donor-CU transmits a second transport migration modification request for the one or more traffics.
68. The method according to any one of Supplements 55 to 66, wherein in a case where an IAB-MT of an IAB-node is reestablished from the first donor-CU to the second donor-CU, and one or more resources serving for one or more traffics of the IAB-node has been established in the topology of the second donor-CU, the second donor-CU transmits a second transport migration modification request for the one or more traffics.
69. The method according to any one of Supplements 55 to 66, wherein in a case where an IAB-MT of an IAB-node establishes dual-connection with the first donor-CU and the second donor-CU, and one or more resources serving for one or more traffics of the IAB-node has been established in the topology of the second donor-CU, the second donor-CU transmits a second transport migration modification request for the one or more traffics.
70. A transport migration management method, wherein an IAB-DU of an IAB-node maintains F1 connection with a first donor-CU, and a resource serving for a traffic of the IAB-node has been established in a topology of a second donor-CU, and the method includes:
   the first donor-CU receives a second transport migration modification request for a traffic transmitted by the second donor-CU; wherein the second donor-CU modifies a resource serving for the traffic in the topology of the second donor-CU.
71. The method according to Supplement 70, wherein the first donor-CU receives the second transport migration modification request used for modifying a routing ID of the traffic in the topology of the second donor-CU and/or a BH RLC channel, transmitted by the second donor-CU.
72. The method according to Supplement 71, wherein the first donor-CU receives the second transport migration modification request via a second TRANSPORT MIGRATION MANAGEMENT REQUEST message.
73. The method according to Supplement 71 or 72, wherein the second transport migration modification request includes the following information:
   a traffic identifier of the traffic;
   BH information of the traffic in the topology of the second donor-CU.
74. The method according to Supplement 73, wherein the BH information in the topology of the second donor-CU includes at least one of the following:
   an egress routing identifier (routing ID) of an uplink traffic;
   an egress BH RLC channel of the uplink traffic; or
   a next-hop BAP address of the uplink traffic.
75. The method according to Supplement 73, wherein the BH information in the topology of the second donor-CU includes at least one of the following:
   an ingress routing identifier (routing ID) of a downlink traffic;
   an ingress BH RLC channel of the downlink traffic; or
   a prior-hop BAP address of the downlink traffic.
76. The method according to any one of Supplements 71 to 75, wherein after the first donor-CU receives the second transport migration modification request for the traffic, the method further includes:
   the first donor-CU configures the IAB-node with uplink BH information that updates the traffic.
77. The method according to any one of Supplements 71 to 76, wherein after the first donor-CU receives the second transport migration modification request for the traffic, the method further includes:
   the first donor-CU configures the IAB-node to update at least one of the following: header rewriting information of a BAP between topologies in an uplink direction, routing information in the topology of the second donor-CU, or BH RLC channel mapping information between the topologies in the uplink direction.
78. The method according to any one of Supplements 71 to 77, wherein after the first donor-CU receives the second transport migration modification request for the traffic, the method further includes:
   the first donor-CU configures the IAB-node to update at least one of the following: header rewriting information of a BAP between topologies in a downlink direction, or BH RLC channel mapping information between the topologies in the downlink direction.
79. The method according to any one of Supplements 70 to 78, wherein the first donor-CU receives the second transport migration modification request used for modifying an IP address for the IAB-node, transmitted by the second donor-CU.
80. The method according to Supplement 79, wherein the second transport migration modification request is included in a second transport migration management request message.
81. The method according to Supplement 79, wherein the second transport migration modification request includes the following information: an IAB-node identifier or IP address request index, a BAP address of a donor-DU in the topology of the first donor-CU or a BAP address of a donor-DU in the topology of the second donor-CU, and an IP address anchored at the donor-DU in the topology of the second donor-CU.
82. The method according to any one of Supplements 79 to 81, wherein, the method further includes:
   the first donor-CU configures the IAB-node with an IP address anchored at a donor-DU in the topology of the second donor-CU.
83. An IAB-donor device, including a memory and a processor, the memory storing a computer program, wherein the processor is configured to execute the transport migration management method according to any one of Supplements 1 to 82.

## Claims

1. An integrated access and backhaul (IAB) donor device, wherein an IAB-DU of an IAB-node maintains F1 connection with a first donor centralized unit, and a resource serving for a traffic of the IAB-node has been established in a topology of a second donor centralized unit, and the device comprises:
a transmitting portion configured to transmit a first transport migration modification request for the traffic to the second donor centralized unit; and
a receiving portion configured to receive a transport migration modification response for the traffic transmitted by the second donor centralized unit.

2. The device according to claim 1, wherein an IAB-MT of the IAB-node maintains radio resource control connection with the second donor centralized unit, or an IAB-MT of the IAB-node maintains radio resource control connection with the first donor centralized unit;
the traffic includes at least one or a combination of the following: an F1 control plane traffic, an F1 user plane traffic, or a non-F1 traffic.

3. The device according to claim 1, wherein the transmitting portion transmits to the second donor centralized unit a first transport migration modification request used for requesting to modify the resource serving for the traffic in the topology of the second donor centralized unit;
wherein the first transport migration modification request is transmitted via a first transport migration management request message.

4. The device according to claim 3, wherein the receiving portion receives a transport migration modification response for modifying the resource serving for the traffic in the topology of the second donor centralized unit, transmitted by the second donor centralized unit;
wherein the transport migration modification response is received via a transport migration management response message.

5. The device according to claim 4, wherein the first transport migration modification request includes the following information: a traffic identifier of the traffic, quality of service and/or a traffic type of the traffic;
the transport migration modification response includes the following information: the traffic identifier of the traffic, and backhaul information of the traffic in the topology of the second donor centralized unit.

6. The device according to claim 5, wherein the backhaul information in the topology of the second donor centralized unit includes at least one of the following:
an ingress routing identifier of a downlink traffic;
an ingress backhaul radio link control channel of the downlink traffic;
a prior-hop backhaul adaptation protocol address of the downlink traffic; or
quality of service (QoS) mapping information of the downlink traffic.

7. The device according to claim 5, wherein the backhaul information in the topology of the second donor centralized unit includes at least one of the following:
an egress routing identifier of an uplink traffic;
an egress backhaul radio link control channel of the uplink traffic; or
a next-hop backhaul adaptation protocol address of the uplink traffic.

8. The device according to claim 1, wherein the device further comprises:
a processing portion configured to perform at least one of the following operations:
updating quality of service (QoS) mapping information of the traffic;
configuring the IAB-node with uplink BH information for updating the traffic;
configuring the IAB-node to update at least one of the following: header rewriting information of a backhaul adaptation protocol between topologies in an uplink direction, routing information in the topology of the second donor centralized unit, or backhaul radio link control channel mapping information between the topologies in the uplink direction; or
configuring the IAB-node to update at least one of the following: header rewriting information of a backhaul adaptation protocol between topologies in a downlink direction, or backhaul radio link control channel mapping information between the topologies in the downlink direction.

9. The device according to claim 8, wherein the transmitting portion further transmits to the second donor centralized unit a first transport migration modification request for requesting modification of an IP address for the IAB-node.

10. The device according to claim 9, wherein the first transport migration modification request is included in a first transport migration management request message;
the first transport migration modification request includes at least one of the following information: an IAB-node identifier or an IP address request index, a backhaul adaptation protocol address of a donor distributed unit in a topology of the first donor centralized unit, or an IP address anchored to the donor distributed unit.

11. The device according to claim 9, wherein the receiving portion further receives a transport migration modification response for modifying the IP address for the IAB-node, transmitted by the second donor centralized unit.

12. The device according to claim 11, wherein the transport migration modification response is included in a transport migration management response message;
the transport migration modification response includes the following information: an IAB-node identifier or IP address request index, a backhaul adaptation protocol address of the donor distributed unit in the topology of the first donor centralized unit, and an IP address anchored to the donor distributed unit in the topology of second donor centralized unit.

13. The device according to claim 11, wherein the processing portion configures the IAB-node with an IP address anchored to a donor distributed unit in the topology of second donor centralized unit.

14. The device according to claim 3, wherein the receiving portion further receives a transport migration modification response for rejecting the first transport migration modification request for the traffic, transmitted by the second donor centralized unit;
wherein the transport migration modification response is received via the transport migration management response message, and the transport migration management response message includes the traffic identifier of the traffic.

15. The device according to claim 1, wherein in a case where the IAB-MT of the IAB-node is switched from the first donor centralized unit to the second donor centralized unit, and one or more resources for serving for one or more traffics of the IAB-node has been established in the topology of the second donor centralized unit, the transmitting portion transmits a first transport migration modification request for the one or more traffics;
or, in a case where the IAB-MT of the IAB-node is reestablished from the first donor centralized unit to the second donor centralized unit, and one or more resources for serving for one or more traffics of the IAB-node has been established in the topology of the second donor centralized unit, the transmitting portion transmits a first transport migration modification request for the one or more traffics;
or, in a case where the IAB-MT of the IAB-node has established dual-connection with the first donor centralized unit and the second donor centralized unit, and one or more resources for serving for one or more traffics of the IAB-node has been established in the topology of the second donor centralized unit, the transmitting portion transmits a first transport migration modification request for the one or more traffics.

16. An integrated access and backhaul (IAB) donor device, wherein an IAB-DU of an IAB-node maintains F1 connection with a first donor centralized unit, and a resource serving for a traffic of the IAB-node has been established in a topology of a second donor centralized unit, and the device comprises:
a transmitting portion configured to transmit a second transport migration modification request for the traffic to the first donor centralized unit; and
a processing portion configured to modify a resource serving for the traffic in the topology of the second donor centralized unit.

17. The device according to claim 16, wherein the transmitting portion transmits to the first donor centralized unit the second transport migration modification request used for modifying a routing identifier and/or a backhaul radio link control channel of the traffic in the topology of the second donor centralized unit;
wherein the second transport migration modification request is transmitted via a second transport migration management request message.

18. The device according to claim 16, wherein the processing portion performs at least one of the following operations:
updating a backhaul radio link control channel and/or backhaul adaptation protocol sublayer routing used by the traffic on a path in the topology of the second donor centralized unit;
updating uplink backhaul information of the traffic, wherein the uplink backhaul information includes a routing identifier, an uplink backhaul radio link control channel and/or a backhaul adaptation protocol address of a next-hop node; or
updating an uplink egress routing identifier, an egress backhaul radio link control channel and/or a backhaul adaptation protocol address of the next-hop node of the traffic; or, updating a downlink ingress routing identifier, an ingress backhaul radio link control channel and/or a backhaul adaptation protocol address of a prior-hop node of the traffic.

19. The device according to claim 16, wherein the transmitting portion further transmits to the first donor centralized unit a second transport migration modification request for modifying an IP address for the IAB-node;
wherein the second transport migration modification request is included in a second transport migration management request message.

20. An integrated access and backhaul (IAB) system, comprising a first donor centralized unit and a second donor centralized unit;
the first donor centralized unit transmits a first transport migration modification request for a traffic, and receives a transport migration modification response for the traffic; the second donor centralized unit receives the first transport migration modification request and transmits the transport migration modification response;
or,
the second donor centralized unit transmits a second transport migration modification request for a traffic, and modifies a resource serving for the traffic in a topology of the second donor centralized unit, and the first donor centralized unit receives the second transport migration modification request.
